# EUROPEAN PATENT APPLICATION

(11) **EP 3 816 774 A1**
(43) Date of publication of application: **05.05.2021**
(21) Application number: 19827076.1
(22) Date of filing: 22.05.2019
(51) Int. Cl.: G06F 3/01, G06F 3/0484, G06F 3/16, G10L 15/28, G10L 17/00

(54) **INFORMATION PROCESSING DEVICE FOR EXECUTING PLURALITY OF PROCESSES IN PARALLEL**

(30) Priority: 28.06.2018 JP 2018122697
(71) Applicant: Sony Corporation, 108-0075 Tokyo (JP)
(72) Inventor: TSURUTA, Yasushi, Tokyo 108-0075 (JP)
(74) Representative: 2SPL Patentanwälte PartG mbB
(86) International application number: PCT/JP2019/020276
(87) International publication number: WO 2020/003820

(57) **Abstract**

To achieve an apparatus and a method for executing, in parallel without delay, pieces of processing for corresponding instructions from a plurality of users to an information processing apparatus. A user-associated instruction analysis unit that generates, for every instruction from a plurality of users to an information processing apparatus, user-associated instruction information associated with the users who have given the corresponding instructions, and a processing execution unit that executes in parallel a plurality of pieces of processing for the corresponding users' instructions on the basis of the user-associated instruction information are included. In a case where the instructions from the plurality of users to the information processing apparatus are instructions to move a pointer in different directions, the processing execution unit executes processing of splitting the pointer and moving a plurality of the pointers in the directions instructed by the corresponding users. In a case where the users' instructions are instructions to select different options, a display area is split to allow pieces of information corresponding to the options of the corresponding users to be displayed in parallel.

## Description

### TECHNICAL FIELD

The present disclosure relates to an information processing apparatus, an information processing system, an information processing method, and a program. More specifically, the present disclosure relates to an information processing apparatus, an information processing system, an information processing method, and a program that perform processing and a response based on a result of voice recognition of a user's utterance.

### BACKGROUND ART

Recently, voice recognition systems that perform voice recognition of a user's utterance and perform a variety of types of processing and responses based on a result of the recognition have been increasingly used.

Such a voice recognition system recognizes and understands a user's utterance input via a microphone, and performs processing accordingly.

For example, in a case where a user utters "What's the weather like tomorrow?", weather information is acquired from a weather information providing server, a system response based on the acquired information is generated, and the generated response is output from a speaker. Specifically, for example, a system's utterance as described below is output.

System's utterance: "Tomorrow will be sunny, but there may be a thunderstorm in the evening."

Equipment that performs such voice recognition includes mobile devices such as smartphones, smart speakers, agent equipment, signage equipment, and the like.

In a configuration using a smart speaker, agent equipment, signage equipment, or the like, there are many people around such equipment in many cases.

Such voice recognition equipment needs to identify an utterer (uttering user) addressing the equipment and provide a service requested by the utterer, specifically, for example, processing such as displaying display information requested by the utterer.

Processing of displaying display information requested by an utterer is disclosed in conventional techniques, for example, Patent Document 1 (Japanese Patent Application Laid-Open No. 2000-187553). This document discloses a configuration in which a position of gaze of an utterer is detected from an image captured by a camera or the like, and display information is controlled on the basis of a result of the detection.

However, for example, in a case where there is a plurality of users in front of agent equipment and these users give different instructions to the equipment almost at the same time, in many cases, the agent equipment cannot simultaneously execute pieces of processing for a plurality of these different instructions.

For example, in a case where, while a user is uttering, for example, "up" as an instruction to operate a pointer displayed on a display screen of the agent equipment, another user who wants to point to another place utters "left", the agent equipment has no choice but to perform processing in response to either one of the instructions. In a case where two users give different instructions as described above, there is no choice but to wait until processing for one user's instruction is completed and then start processing in accordance with the other user's instruction.

As described above, in a case where two or more users separately utter different instructions almost at the same time, the agent equipment cannot execute these two instructions at the same time. There is no choice but to perform processing in accordance with only instruction information of an utterance recognized first by the equipment, and after completion of the processing for that instruction, perform processing in accordance with the next user's instruction. This impairs convenience of users.

### CITATION LIST

### PATENT DOCUMENT

Patent Document 1: Japanese Patent Application Laid-Open No. 2000-187553

### SUMMARY OF THE INVENTION

### PROBLEMS TO BE SOLVED BY THE INVENTION

The present disclosure has been made in view of the problem described above, for example, and is aimed at providing an information processing apparatus, an information processing system, an information processing method, and a program capable of executing processing for different instructions of a plurality of users without delay.

### SOLUTIONS TO PROBLEMS

A first aspect of the present disclosure provides
an information processing apparatus including:
a user-associated instruction analysis unit that generates, for every instruction from a plurality of users to an information processing apparatus, user-associated instruction information associated with a user who has given the corresponding instruction; and
a processing execution unit that executes in parallel a plurality of pieces of processing for the corresponding users' instructions on the basis of the user-associated instruction information.

Moreover, a second aspect of the present disclosure provides
an information processing system including an information processing terminal and a server, in which
the information processing terminal includes
a voice input unit, an image input unit,
a voice output unit, an image output unit, and
a communication unit that transmits, to the server, voice acquired via the voice input unit and a captured image acquired via the image input unit,
the server executes in parallel, on the basis of data received from the information processing terminal, a plurality of pieces of processing for corresponding instructions from a plurality of users to the information processing terminal, and transmits a processing result to the information processing terminal, and
the information processing terminal outputs the processing result received from the server to at least one of the voice output unit or the image output unit.

Moreover, a third aspect of the present disclosure provides
an information processing method executed in an information processing apparatus, the method including:
a user-associated instruction analysis step of generating, by a user-associated instruction analysis unit, for every instruction from a plurality of users to an information processing apparatus, user-associated instruction information associated with a user who has given the corresponding instruction; and
a processing execution step of executing in parallel, by a processing execution unit, a plurality of pieces of processing for the corresponding users' instructions on the basis of the user-associated instruction information.

Moreover, a fourth aspect of the present disclosure provides
an information processing method executed in an information processing system including an information processing terminal and a server, in which
the information processing terminal transmits, to the server, voice acquired via a voice input unit and a captured image acquired via an imaging unit,
the server executes in parallel, on the basis of data received from the information processing terminal, a plurality of pieces of processing for corresponding instructions from a plurality of users to the information processing terminal, and transmits a processing result to the information processing terminal, and
the information processing terminal outputs the processing result received from the server to at least one of a voice output unit or an image output unit.

Moreover, a fifth aspect of the present disclosure provides
a program that causes information processing to be executed in an information processing apparatus, the program causing execution of:
a user-associated instruction analysis step of causing a user-associated instruction analysis unit to generate, for every instruction from a plurality of users to an information processing apparatus, user-associated instruction information associated with a user who has given the corresponding instruction; and
a processing execution step of causing a processing execution unit to execute in parallel a plurality of pieces of processing for the corresponding users' instructions on the basis of the user-associated instruction information.

Note that the program of the present disclosure can be, for example, provided by a storage medium or a communication medium provided in a computer-readable format to an information processing apparatus or a computer system that can execute a variety of program codes. Providing such a program in a computer-readable format enables implementation of processing on the information processing apparatus or the computer system in accordance with the program.

Other objects, features, and advantages of the present disclosure will become apparent from the detailed description based on the embodiment of the present disclosure described later and the accompanying drawings. Note that, in the present specification, a system is a logical set configuration of a plurality of devices, and is not limited to one in which each configuration device is in the same housing.

### EFFECTS OF THE INVENTION

A configuration of an embodiment of the present disclosure enables achievement of an apparatus and a method for executing, in parallel without delay, pieces of processing for corresponding instructions from a plurality of users to an information processing apparatus.

Specifically, for example, a user-associated instruction analysis unit that generates, for every instruction from a plurality of users to an information processing apparatus, user-associated instruction information associated with the users who have given the corresponding instructions, and a processing execution unit that executes in parallel a plurality of pieces of processing for the corresponding users' instructions on the basis of the user-associated instruction information are included. In a case where the instructions from the plurality of users to the information processing apparatus are instructions to move a pointer in different directions, the processing execution unit executes processing of splitting the pointer and moving a plurality of the pointers in the directions instructed by the corresponding users. In a case where the users' instructions are instructions to select different options, a display area is split to allow pieces of information corresponding to the options of the corresponding users to be displayed in parallel.

The present configuration enables achievement of an apparatus and a method for executing, in parallel without delay, pieces of processing for corresponding instructions from a plurality of users to an information processing apparatus.

Note that effects described herein are merely illustrative and are not intended to be restrictive, and there may be additional effects.

### BRIEF DESCRIPTION OF DRAWINGS

Fig. 1 is a diagram illustrating a specific processing example of an information processing apparatus that responds to a user's utterance.
Fig. 2 is a diagram illustrating a configuration example and a usage example of the information processing apparatus.
Fig. 3 is a diagram illustrating a configuration example of the information processing apparatus of the present disclosure.
Fig. 4 is a diagram illustrating an example of processing executed by the information processing apparatus of the present disclosure.
Fig. 5 is a diagram illustrating an example of processing executed by the information processing apparatus of the present disclosure.
Fig. 6 is a diagram illustrating an example of processing executed by the information processing apparatus of the present disclosure.
Fig. 7 is a diagram illustrating an example of processing executed by the information processing apparatus of the present disclosure.
Fig. 8 illustrates a flowchart illustrating a sequence of processing executed by the information processing apparatus of the present disclosure.
Fig. 9 is a diagram illustrating an example of processing executed by the information processing apparatus of the present disclosure.
Fig. 10 is a diagram illustrating an example of processing executed by the information processing apparatus of the present disclosure.
Fig. 11 is a diagram illustrating an example of processing executed by the information processing apparatus of the present disclosure.
Fig. 12 is a diagram illustrating an example of processing executed by the information processing apparatus of the present disclosure.
Fig. 13 is a diagram illustrating an example of processing executed by the information processing apparatus of the present disclosure.
Fig. 14 is a diagram illustrating an example of processing executed by the information processing apparatus of the present disclosure.
Fig. 15 is a diagram illustrating an example of processing executed by the information processing apparatus of the present disclosure.
Fig. 16 illustrates a flowchart illustrating a sequence of processing executed by the information processing apparatus of the present disclosure.
Fig. 17 illustrates a flowchart illustrating a sequence of processing executed by the information processing apparatus of the present disclosure.
Fig. 18 is a diagram illustrating a configuration example of an information processing system.
Fig. 19 is a diagram illustrating a hardware configuration example of the information processing apparatus.

### MODE FOR CARRYING OUT THE INVENTION

An information processing apparatus, an information processing system, an information processing method, and a program of the present disclosure will be described below in detail with reference to the drawings. Note that the description will be given according to the following items.
1. Outline of processing executed by information processing apparatus
2. Configuration example of information processing apparatus
3. Example of processing for instruction to move pointer displayed on image output unit (display unit)
4. Specific example of processing of updating information displayed on image output unit (display unit)
5. Information processing apparatus, and configuration example of information processing system
6. Hardware configuration example of information processing apparatus
7. Summary of configuration of present disclosure

### [1. Outline of processing executed by information processing apparatus]

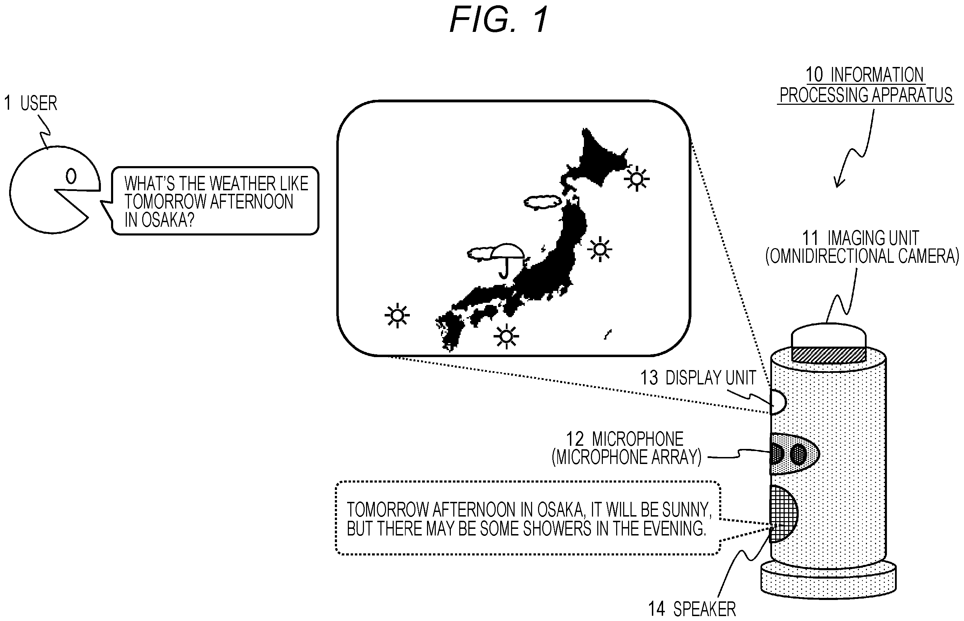

First, an outline of processing executed by the information processing apparatus of the present disclosure will be described with reference to Fig. 1 and the following drawings.

Fig. 1 is a diagram illustrating a processing example of an information processing apparatus 10 that recognizes a user's utterance made by an utterer 1 and makes a response.

The information processing apparatus 10 executes voice recognition processing for a user's utterance by the utterer 1, for example,
user's utterance: "What's the weather like tomorrow afternoon in Osaka?"

Moreover, the information processing apparatus 10 executes processing based on a result of voice recognition of the user's utterance.

In the example illustrated in Fig. 1, data for responding to the user's utterance "What's the weather like tomorrow afternoon in Osaka?" is acquired, a response is generated on the basis of the acquired data, and the generated response is output via a speaker 14.

In the example illustrated in Fig. 1, the information processing apparatus 10 displays an image indicating weather information, and makes the following system response.

System response: "Tomorrow afternoon in Osaka, it will be sunny, but there may be some showers in the evening."

The information processing apparatus 10 executes voice synthesis processing (TTS: Text To Speech) to generate and output the system response described above.

The information processing apparatus 10 generates and outputs a response using knowledge data acquired from a storage unit in the apparatus or knowledge data acquired via a network.

The information processing apparatus 10 illustrated in Fig. 1 includes an imaging unit 11, a microphone 12, a display unit 13, and the speaker 14, and has a configuration that enables voice input/output and image input/output.

The imaging unit 11 is, for example, an omnidirectional camera capable of capturing an almost 360° surrounding image. Furthermore, the microphone 12 is configured as a microphone array constituted by a plurality of microphones capable of identifying a sound source direction.

The display unit 13 in the example illustrated in the figure shows an example in which a projector-type display unit is used. However, the display unit 13 may be a display-type display unit, or may be configured to output display information to a display unit such as a television or a PC connected to the information processing apparatus 10.

The information processing apparatus 10 illustrated in Fig. 1 is called, for example, a smart speaker or agent equipment.

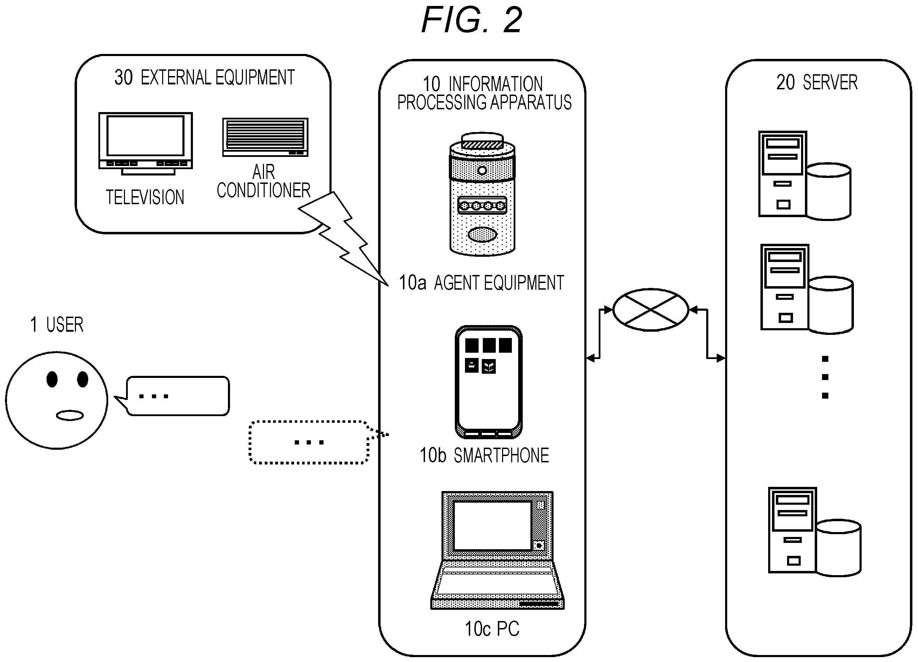

As illustrated in Fig. 2, the information processing apparatus 10 of the present disclosure is not limited to an agent equipment 10a, and can be in a variety of device forms such as a smartphone 10b, a PC 10c, or the like, or signage equipment installed in a public place.

The information processing apparatus 10 not only recognizes an utterance of the utterer 1 and makes a response based on the user's utterance, but also controls external equipment 30 such as a television and an air conditioner illustrated in Fig. 2 in response to the user's utterance.

For example, in a case where the user's utterance is a request such as "change the channel of the television to 1" or "set the temperature of the air conditioner to 20°C," the information processing apparatus 10 outputs, on the basis of a result of voice recognition of the user's utterance, a control signal (Wi-Fi, infrared light, or the like) to the external equipment 30 so that a control is executed in accordance with the user's utterance.

Note that the information processing apparatus 10 is connected with a server 20 via the network, and can acquire, from the server 20, information necessary to generate a response to a user's utterance. Furthermore, the information processing apparatus 10 may be configured to cause a server to perform voice recognition processing or semantic analysis processing.

### [2. Configuration example of information processing apparatus]

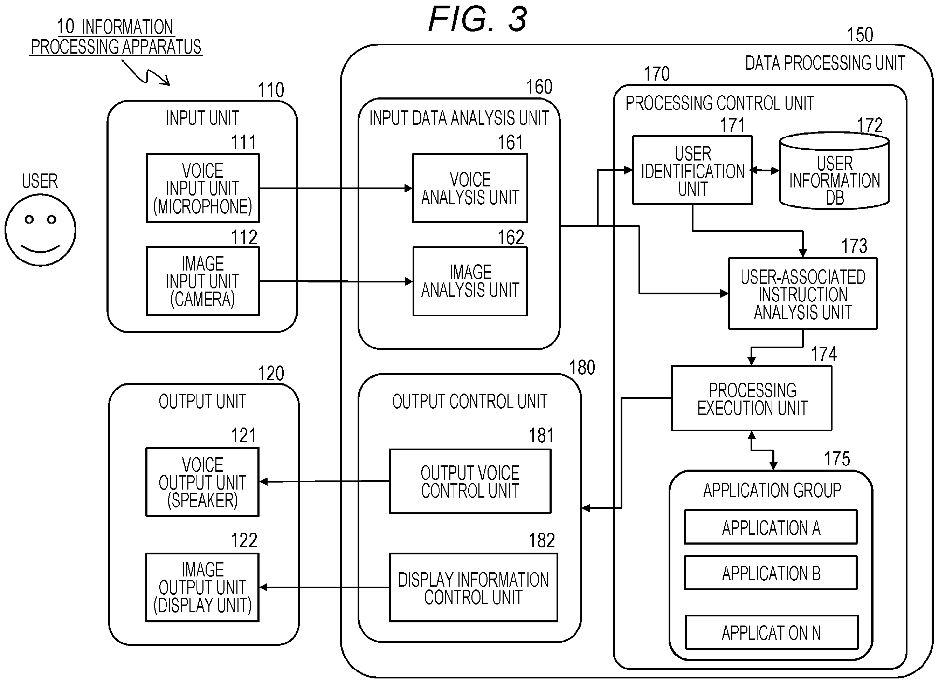

Next, a specific configuration example of the information processing apparatus will be described with reference to Fig. 3.

Fig. 3 is a diagram illustrating a configuration example of the information processing apparatus 10 that recognizes a user's utterance and performs processing or makes a response corresponding to the user's utterance.

As illustrated in Fig. 3, the information processing apparatus 10 includes an input unit 110, an output unit 120, and a data processing unit 150.

Note that the data processing unit 150 can be included in the information processing apparatus 10, and it is also possible to use a data processing unit of an external server instead of the data processing unit 150 being included in the information processing apparatus 10. In the case of a configuration in which a server is used, the information processing apparatus 10 transmits input data input from the input unit 110 to the server via a network, receives a result of processing by the data processing unit 150 of the server, and outputs the result via the output unit 120.

Next, components of the information processing apparatus 10 illustrated in Fig. 3 will be described.

The input unit 110 includes a voice input unit (microphone) 111 and an image input unit (camera) 112.

The output unit 120 includes a voice output unit (speaker) 121 and an image output unit (display unit) 122.

The information processing apparatus 10 includes at least these components.

The voice input unit (microphone) 111 corresponds to the microphone 12 of the information processing apparatus 10 illustrated in Fig. 1. The voice input unit (microphone) 111 is configured as a microphone array constituted by a plurality of microphones capable of identifying a sound source direction.

The imaging unit 112 corresponds to the imaging unit 11 of the information processing apparatus 10 illustrated in Fig. 1. For example, it is an omnidirectional camera capable of capturing an almost 360° surrounding image.

The voice output unit (speaker) 121 corresponds to the speaker 14 of the information processing apparatus 10 illustrated in Fig. 1.

The image output unit (display unit) 122 corresponds to the display unit 13 of the information processing apparatus 10 illustrated in Fig. 1.

Note that the image output unit (display unit) 122 may be constituted by, for example, a display such as a projector or a liquid crystal display unit, or may have a configuration in which a display unit of a television that is an external device is used.

As described previously, the data processing unit 150 is included in either the information processing apparatus 10 or a server capable of communicating with the information processing apparatus 10.

The data processing unit 150 includes an input data analysis unit 160, a processing control unit 170, an output control unit 180, and a storage unit 190.

The input data analysis unit 160 includes a voice analysis unit 161 and an image analysis unit 162.

The processing control unit 170 includes a user identification unit 171, a user information DB (database) 172, a user-associated instruction analysis unit 173, a processing execution unit 174, and an application group 175.

The output control unit 180 includes an output voice control unit 181 and a display information control unit 182.

Voice uttered by a user is input to the voice input unit 111 such as a microphone.

The voice input unit (microphone) 111 inputs, to the voice analysis unit 161, the input user's utterance voice.

The voice analysis unit 161 has, for example, an automatic speech recognition (ASR) function, and converts voice data into text data constituted by a plurality of words.

Moreover, utterance semantic analysis processing is executed on the text data.

The voice analysis unit 161 has, for example, a natural-language comprehension function such as natural language understanding (NLU), and estimates, from the text data, an intention (intent) of the user's utterance and entity information (entity), which is a meaningful element (significant element) included in the utterance.

With the intention (intent) and the entity information (entity) accurately estimated and acquired from the user's utterance, the information processing apparatus 10 can perform accurate processing on the user's utterance.

The voice analysis unit 161 further performs sound source direction estimation processing. As described previously, the voice input unit (microphone) 111 is configured as a microphone array constituted by a plurality of microphones capable of identifying a sound source direction. Sounds acquired by a microphone array are sounds acquired by a plurality of microphones arranged at a plurality of different positions. The voice analysis unit 161 estimates the sound source direction on the basis of sounds acquired by the plurality of microphones. The microphones constituting the microphone array acquire sound signals having a phase difference in accordance with the sound source direction. This phase difference varies in accordance with the sound source direction. The voice analysis unit 161 obtains the sound source direction by analyzing a phase difference between voice signals acquired by the microphones.

Information regarding the sound source direction of the user's utterance, which is analysis information from the voice analysis unit 161, is input to the user identification unit 171 of the processing control unit 170.

Furthermore, the intention (intent) of the user's utterance, which is analysis information from the voice analysis unit 161, and an utterance semantic analysis result including the entity information (entity) are input to the user-associated instruction analysis unit 173 of the processing control unit 170.

The image input unit 112 captures images of and around an uttering user and inputs them to the image analysis unit 162.

The image analysis unit 162 analyzes a facial expression of an uttering user, information regarding a position of a user, an action, line-of-sight information, information regarding surroundings of an uttering user, and the like, and outputs results of the analysis to the user identification unit 171 and the user-associated instruction analysis unit 172 in the processing control unit 170.

The user identification unit 171 of the processing control unit 170 inputs analysis information from the voice analysis unit 161 and the image analysis unit 162 of the input data analysis unit 160, and performs processing of identifying a user who has requested to give an instruction to the information processing apparatus 10 or a user in front of the information processing apparatus 10.

The user information DB 172 stores user information regarding users registered in advance. Specifically, a face image, facial characteristic information, voice information, and other attribute information such as age and sex are recorded in association with a user identifier (user ID).

The user identification unit 171 compares and collates information input from the input data analysis unit 160 with information registered in the user information DB 172, and performs processing of identifying a user who has requested to give an instruction to the information processing apparatus 10 or a user in front of the information processing apparatus 10.

The user-associated instruction analysis unit 173 associates user identification information obtained from identification by the user identification unit 171 with information regarding instructions to the information processing apparatus 10 obtained on the basis of analysis information from the voice analysis unit 161 and the image analysis unit 162 of the input data analysis unit 160, and analyzes the information regarding the instructions associated with the corresponding users.

For example,
(1) instruction a of user A
(2) instruction b of user B
as described above, for each instruction, processing is performed to determine which user has given the instruction. Specifically, data in which a user ID and instruction information are associated with each other, that is, user-associated instruction information is generated and input to the processing execution unit 174.

Note that the user-associated instruction analysis unit 173 generates user-associated instruction information by analyzing, besides an intention of a user's utterance obtained by voice analysis of the user's utterance, a user's action such as a direction of a user's face, a line-of-sight, or pointing obtained from information of an image captured by the image input unit (camera) 112.

The user-associated instruction information generated by the user-associated instruction analysis unit 173 is input to the processing execution unit 174.

The processing execution unit 174 executes processing in accordance with the user-associated instruction information.

Specifically, for example, an application that executes processing in accordance with a user's instruction is selected from the application group 175 and executed. Note that these applications are not limited to applications stored in the storage unit in the information processing apparatus 10, and may be applications provided by an external server.

A result of the processing executed in the processing execution unit 174 is output via the output control unit 180. The output control unit 180 includes the output voice control unit 181 and the display information control unit 182.

The output voice control unit 181 generates a system's utterance for a user on the basis of the result of execution of the application in the processing execution unit 174.

Response voice information generated by the output voice control unit 181 is output via the voice output unit 121 such as a speaker.

The display information control unit 182 performs processing such as generation and update of information displayed on the image output unit (display unit) 122 on the basis of the result of execution of the application in the processing execution unit 174. For example, in a case where a user has made a user's utterance asking to show a world map, a world map is displayed.

Furthermore, in a case where a user has given an instruction to move a pointer displayed on the image output unit (display unit) 122 up, processing of moving the pointer up in accordance with the user's instruction is executed.

Furthermore, in a case where a user has given an instruction to select one image from a plurality of indexed images displayed on the image output unit (display unit) 122, processing such as displaying an enlarged image of the selected image or displaying detailed information is performed.

Specific examples of these pieces of processing will be described below.

### [3. Example of processing for instruction to move pointer displayed on image output unit (display unit)]

Next, a specific example of processing executed by the information processing apparatus 101 in a case where a user's instruction to the information processing apparatus 10 is an instruction to move a pointer displayed on the image output unit (display unit) 122 will be described.

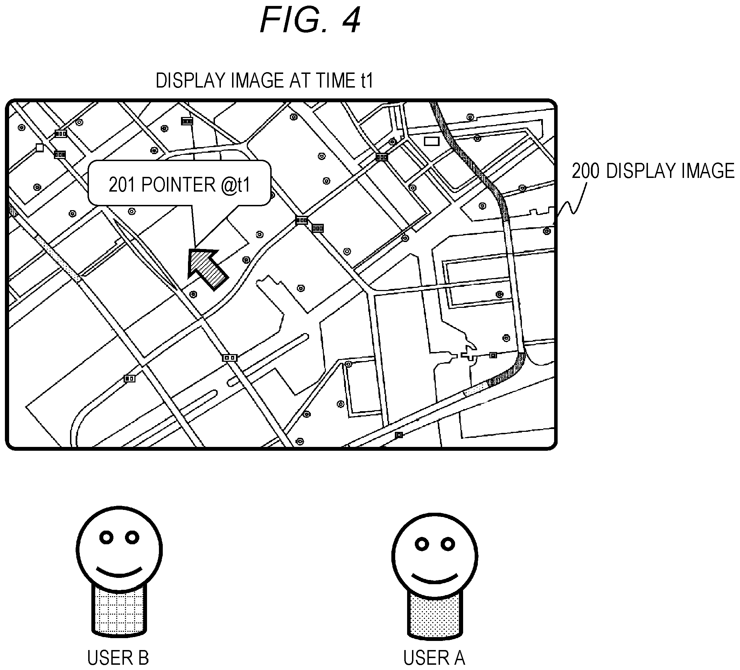

Fig. 4 illustrates an example of a display image 200 of the image output unit (display unit) 122 of the information processing apparatus 10.

In front of the display image 200, there are two users, user A and user B.

These users have been identified by the user identification unit 171. That is, both users A and B are users registered in the user information DB 172, and the information processing apparatus 10 recognizes that the users viewing the display image 200 are user A and user B.

The information processing apparatus 10 is displaying map data as the display image 200. This display information 200 is display data generated by a map display application executed in the processing execution unit 174.

In accordance with the map display application executed in the processing execution unit 174, the information processing apparatus 10 outputs, for example, the following system's utterance via the voice output unit (speaker) 121.

System's utterance: "Designate a destination"

Along with this system's utterance, an application of the processing execution unit 174 displays a pointer on the display unit via the display information control unit 182.

For example, a pointer @t1, 201 illustrated in Fig. 4 is displayed on a map.

Note that @t1 means that the display data is at time t1.

The display image 200 illustrated in Fig. 4 is a display image at time t1.

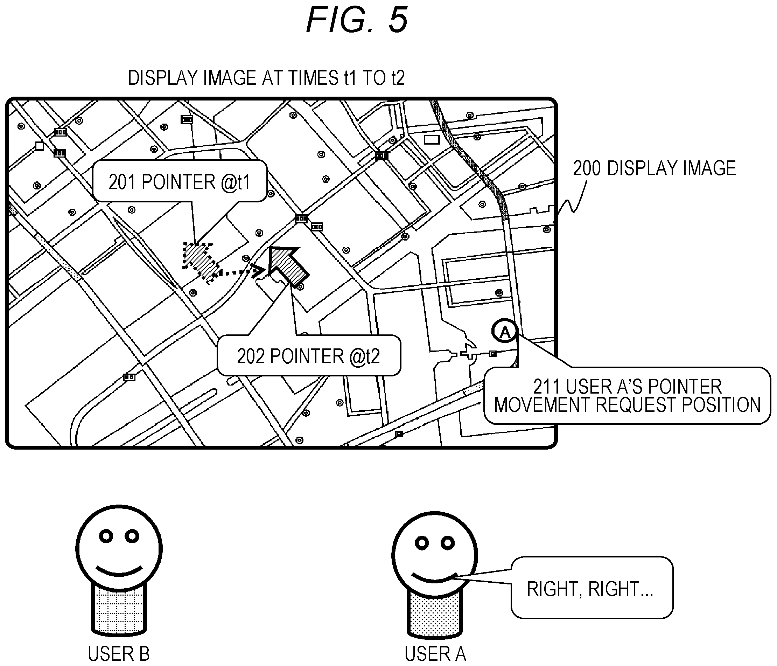

Next, Fig. 5 illustrates an example of the display image 200 at and after time t1 (t1 to t2).

At time t1, user A makes the following user's utterance.

User's utterance by user A: "Right, right..."

The information processing apparatus 10 recognizes that user A is giving an instruction to move the pointer to the right on the basis of a result of voice recognition of this user's utterance, and the processing execution unit 174 performs processing of moving the pointer rightward on the display image 200.

As illustrated in Fig. 5, the pointer @t1, 201 at time t1 is moved to the right and displayed at a position of a pointer @t2, 202 at time t2.

Note that the position to which user A has requested the pointer to be moved is assumed to be a "user A's pointer movement request position 211" illustrated in a right area of the display image 200 in Fig. 5.

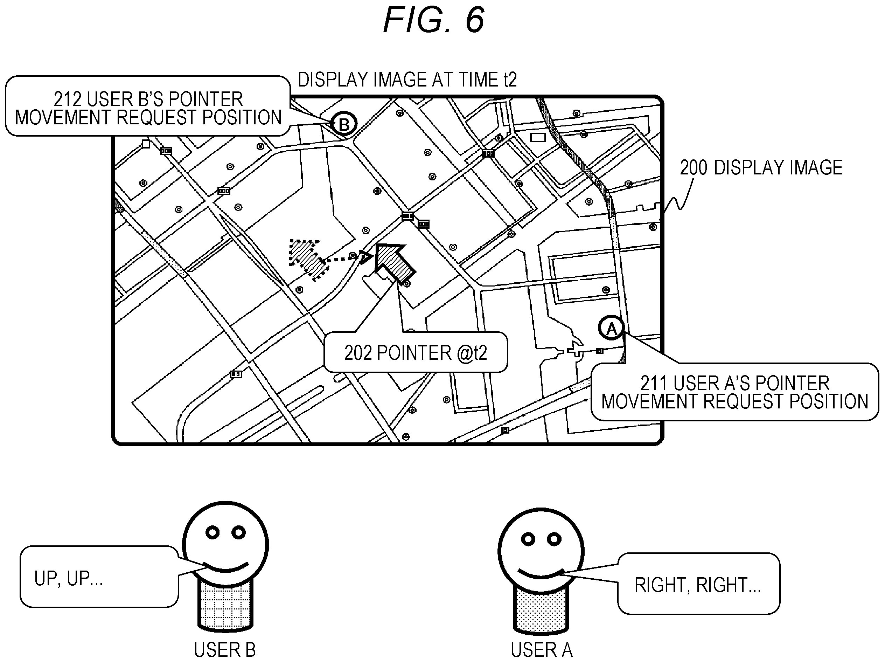

Fig. 6 illustrates an example of the display image 200 at the next time t2.

At time t2, user B makes the following user's utterance.

User's utterance by user B: "Up, up..."

At this time, user A is also continuously making the following users' utterances.

User's utterance by user A: "Right, right..."

On the basis of results of voice recognition of these users' utterances, the information processing apparatus 10 recognizes that user B is giving an instruction to move the pointer up, and user A is continuously giving an instruction to move the pointer to the right.

As illustrated in Fig. 6, at time t2, the pointer is displayed at the position of the pointer @t2, 202.

Furthermore, the position to which user B has requested the pointer to be moved is assumed to be a "user B's pointer movement request position 212" illustrated in an upper area of the display image 200 in Fig. 6.

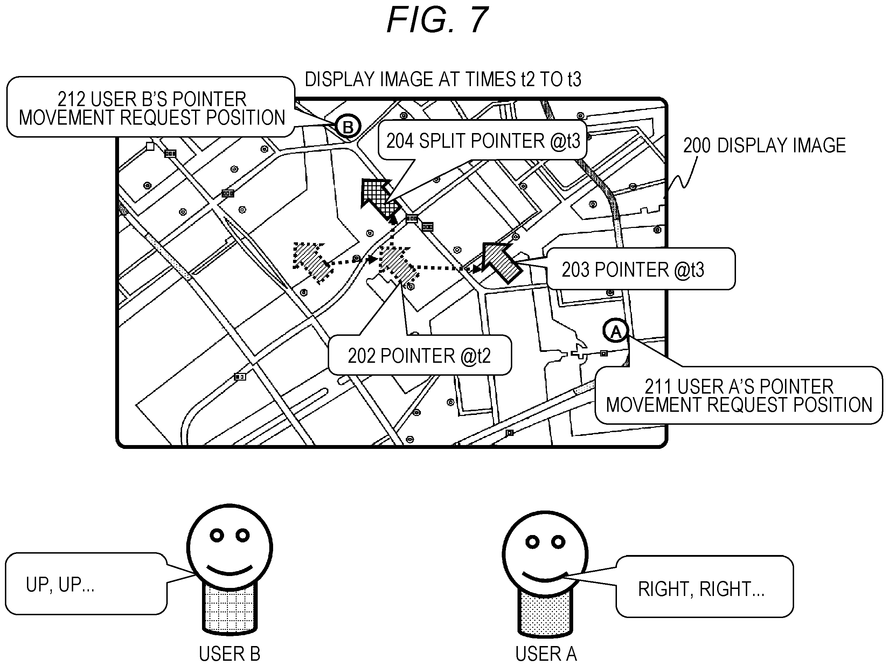

Fig. 7 illustrates an example of the display image 200 at the next time t3.

As described in Fig. 6 above, users A and B have been making the following users' utterances since time t2.

User's utterance by user A: "Right, right..."

User's utterance by user B: "Up, up..."

As described above, each of users A and B is giving an instruction to move the pointer in a different direction.

In this case, the user-associated instruction analysis unit 173 of the processing control unit 170 of the information processing apparatus 10 recognizes that the following two different instructions have been given as user-associated instructions to the information processing apparatus 10.
(Instruction 1 associated with user A) user A's instruction to move the pointer to the right
(Instruction 2 associated with user B) user B's instruction to move the pointer up

The user-associated instruction analysis unit 173 of the processing control unit 170 of the information processing apparatus 10 recognizes that these two different instructions are being given by two different users, and inputs these two different pieces of user-associated instruction information to the processing execution unit 174.

The processing execution unit 174 executes processing in accordance with the two different user-associated instructions analyzed by the user-associated instruction analysis unit 173.

That is, as illustrated in Fig. 7, the pointer @t2 displayed at the pointer position at time t2 is split into two.

After the splitting, the following two pieces of processing are executed in parallel.
(Instruction 1 associated with user A) user A's instruction to move the pointer to the right,
   in accordance with this user A's instruction, the pointer is moved rightward, and one pointer is displayed as a pointer @t3, 203. Moreover,
(instruction 2 associated with user B) user B's instruction to move the pointer up,
   in accordance with this user B's instruction, the pointer is moved upward, and one split pointer is displayed as a split pointer @t3, 204.

That is, at time t2, the pointer is split, and two pointers, that is, a pointer that moves rightward and a pointer that moves upward, are displayed at the same time.

At time t3,
the pointer @t3, 203 that has moved rightward in accordance with the user A's instruction and
the split pointer @t3, 204 that has moved upward in accordance with the user B's instruction,
these two pointers are displayed together on the display image 200.

After that, the two pointers follow the corresponding movement instructions of user A and user B, and finally reach the corresponding positions, the "user A's pointer movement request position 211" and the "user B's pointer movement request position 212" illustrated in the figure.

The processing execution unit 174 identifies each of the displayed pointers as an object associated with a user, and executes processing of moving each pointer in accordance with the instruction of the corresponding user.

As described above, the information processing apparatus 10 of the present disclosure individually recognizes instructions for each user, and individually executes the corresponding instructions in parallel.

Note that a user can give an instruction to operate a pointer by, as an utterance indicating a direction, instructions such as north, south, east, and west, besides the instructions up, down, left, and right described above.

Moreover, such an instruction is not limited to a user's utterance, and may be an operation on a numeric keypad configured as an input unit of the information processing apparatus 10, for example, an operation on the input unit such as 8 for up or 2 for down, with the numeric keypad used as direction keys.

Furthermore, such an instruction may be an action of a user, for example, pointing by the user. For example, the image analysis unit 162 analyzes user actions, and the user-associated instruction analysis unit 173 analyzes user-associated instructions in accordance with the actions of the corresponding users.

Processing of determining whether or not to split a pointer is executed by the processing execution unit 174 in accordance with a result of analysis by the user-associated instruction analysis unit 173.

The processing execution unit 174 splits a pointer in a case where user-associated instructions input from the user-associated instruction analysis unit 173 are different instructions from two different users.

That is, whether or not to split the pointer is determined on the basis of whether or not a user who has been instructing a pointer movement and a different new user have given different movement instructions.

A determination as to whether or not a user who has given an instruction is a new user different from the user who has been giving an instruction is executed by the user-associated instruction analysis unit 173 in accordance with a result of identification by the user identification unit 171.

The user identification unit 171 performs user identification processing on the basis of information regarding a voice waveform of a user's utterance and a direction of the voice analyzed by the voice analysis unit 161, and also a user's face, an entire image of the user, a position of the user, and the like analyzed by the image analysis unit 162. Note that this user identification processing is performed using information registered in the user information DB 172.

When a new user, who has not performed a pointer operation such as an instruction to move a pointer, instructs a different pointer operation such as moving in a new different direction, the processing execution unit 174 splits the pointer to display a plurality of pointers, performs a plurality of pieces of movement processing in accordance with the instructions of the corresponding users, and executes in parallel a plurality of pieces of processing in accordance with intentions of the corresponding users.

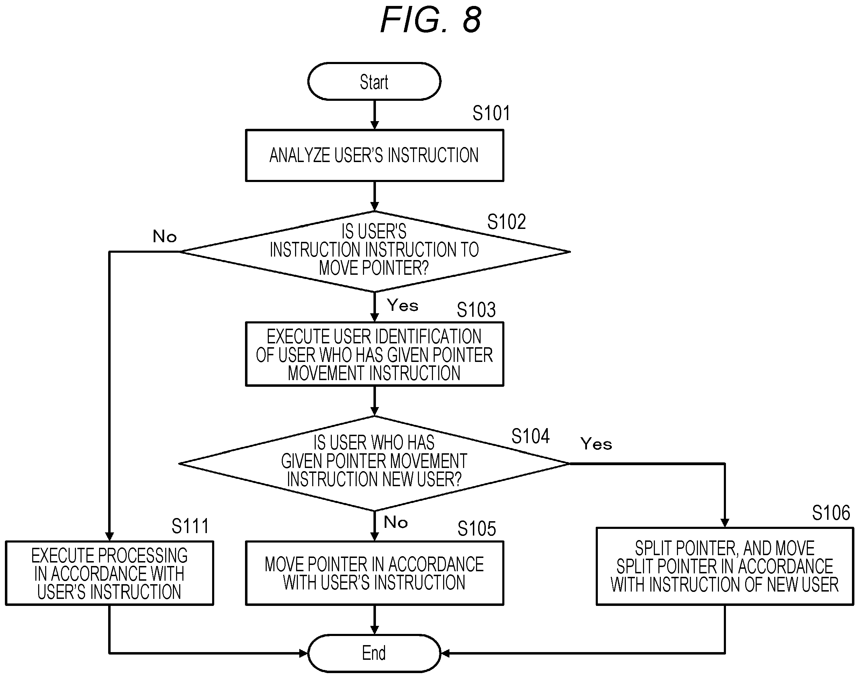

A processing sequence for splitting a pointer and performing pieces of processing associated with a plurality of users described with reference to Figs. 4 to 7 will be described with reference to a flowchart illustrated in Fig. 8.

Note that the processing illustrated in the flow in Fig. 8 can be executed in accordance with a program stored in the storage unit of the information processing apparatus 10, and can be performed as, for example, program execution processing by a processor such as a CPU having a program execution function.

The processing of each step of the flow illustrated in Fig. 8 will be described below.

### (Step S101)

First, in step S101, processing of analyzing a user's instruction given to the information processing apparatus 10 is executed.

This processing of analyzing the user's instruction is performed by the input data analysis unit 160 and the processing control unit 170.

The user's instruction can be given by a variety of actions of a user such as a user's utterance, pointing, a face direction, and a movement of a line-of-sight.

The voice analysis unit 161 of the input data analysis unit 160 analyzes a user's utterance input via the voice input unit (microphone) 111 to analyze whether or not a user's instruction has been given, the intention of the user's instruction, and the like.

Furthermore, the image analysis unit 162 of the input data analysis unit 160 analyzes an image of the user input via the image input unit (camera) 112 to analyze whether or not a user's instruction has been given, the intention of the user's instruction, and the like on the basis of a user action such as pointing.

This analysis information is input to the user identification unit 171 and the user-associated instruction analysis unit 173 of the processing control unit 170.

### (Step S102)

In step S102, on the basis of the analysis result, the input data analysis unit 160 determines whether or not the user's instruction is an instruction to move a pointer.

If the user's instruction is an instruction to move the pointer, the processing proceeds to step S103.

If the user's instruction is not an instruction to move the pointer, the processing proceeds to step S111.

### (Step S111)

First, the processing of step S111 will be described.

Step S111 is processing executed if the user's instruction is not an instruction to move the pointer in step S102.

If the user's instruction is not an instruction to move the pointer, in step S111, processing is executed in accordance with the user's instruction that is not a pointer movement instruction.

This processing is executed by the processing execution unit 174 in accordance with user-associated instruction information analyzed by the user-associated instruction analysis unit 173.

As described previously, the user-associated instruction analysis unit 173 associates user identification information obtained from identification by the user identification unit 171 with information regarding instructions to the information processing apparatus 10 obtained on the basis of analysis information from the voice analysis unit 161 and the image analysis unit 162 of the input data analysis unit 160, and analyzes the information regarding the instructions associated with the corresponding users.

For example,
(1) instruction a of user A
(2) instruction b of user B
as described above, for each instruction, processing is performed to determine which user has given the instruction. Specifically, data in which a user ID and instruction information are associated with each other, that is, user-associated instruction information is generated and input to the processing execution unit 174.

The processing execution unit 174 executes processing in accordance with the user-associated instruction information analyzed by the user-associated instruction analysis unit 173.

Specifically, for example, an application that executes processing in accordance with a user's instruction is selected from the application group 175 and executed. Note that these applications are not limited to applications stored in the storage unit in the information processing apparatus 10, and may be applications provided by an external server.

### (Step S103)

Next, the processing of step S103 will be described.

Step S103 is processing executed if the user's instruction is an instruction to move the pointer in step S102.

If the user's instruction is an instruction to move the pointer, user identification of the user who has given the pointer movement instruction is executed in step S103.

This processing is executed by the user identification unit 171 and the user-associated instruction analysis unit 173.

The user identification unit 171 inputs analysis information from the voice analysis unit 161 and the image analysis unit 162 of the input data analysis unit 160, and performs processing of identifying a user who has requested to give an instruction to the information processing apparatus 10 or a user in front of the information processing apparatus 10.

The user identification unit 171 compares and collates information input from the input data analysis unit 160 with information registered in the user information DB 172, and performs processing of identifying a user who has requested to give an instruction to the information processing apparatus 10 or a user in front of the information processing apparatus 10.

This user identification information is input to the user-associated instruction analysis unit 173, and the user-associated instruction analysis unit 173 identifies the user who has given the user's pointer movement instruction to the information processing apparatus 10 obtained on the basis of the user identification information obtained from identification by the user identification unit 171 and the analysis information from the voice analysis unit 161 and the image analysis unit 162 of the input data analysis unit 160.

### (Step S104)

Moreover, in step S104, the user-associated instruction analysis unit 173 determines whether or not the user who has given the pointer movement instruction is a new user.

That is, processing of determining whether or not a new user, who has not performed a pointer operation such as an instruction to move a pointer, instructs a different pointer operation such as moving in a new different direction is performed.

As described previously, the user-associated instruction analysis unit 173 generates data in which user identification information obtained from identification by the user identification unit 171 and user's instruction information obtained on the basis of analysis information from the input data analysis unit 160 are associated with each other, and it is determined, on the basis of this data, whether or not the user who has given the pointer movement instruction is a new user.

If it is determined that the user who has given the pointer movement instruction is not a new user but the same user who has been operating the pointer, the processing proceeds to step S105.

On the other hand, if it is determined that the user who has given the pointer movement instruction is a new user different from the user who has been operating the pointer, the processing proceeds to step S106.

### (Step S105)

Step S105 is processing executed if it is determined in step S104 that the user who has given the pointer movement instruction is not a new user but the same user who has been operating the pointer.

In this case, in step S105, the pointer is moved in accordance with the user's instruction.

This processing is executed by the processing execution unit 174. The processing execution unit 174 inputs user-associated instruction information analyzed by the user-associated instruction analysis unit 173, that is, information regarding the pointer movement instruction by the same user as before, and executes processing in accordance with this input instruction information.

Specifically, an application is executed to output a processing command that causes the display information control unit 182 of the output control unit 180 to change a display position of the pointer, and thus processing of moving the pointer position in the direction instructed by the user is performed.

### (Step S106)

Step S106 is processing executed if it is determined in step S104 that the user who has given the pointer movement instruction is a new user who is different from the user who has been operating the pointer.

In this case, in step S106, the pointer is split, and a split pointer is moved and displayed in accordance with the instruction of the new user. This processing corresponds to the processing described above with reference to Fig. 7.

As described above with reference to Fig. 7, the processing execution unit 174 inputs, for example, the following two pieces of user-associated instruction information as user-associated instruction information analyzed by the user-associated instruction analysis unit 173.
(Instruction 1 associated with user A) user A's instruction to move the pointer to the right
(Instruction 2 associated with user B) user B's instruction to move the pointer up

The processing execution unit 174 executes processing in accordance with these two different user-associated instructions.

That is, as illustrated in Fig. 7, the pointer @t2 displayed at the pointer position at time t2 is split into two, and one is,
(instruction 1 associated with user A) user A's instruction to move the pointer to the right,
   in accordance with this user A's instruction, the pointer is moved rightward so that one pointer is displayed as the pointer @t3, 203, and moreover,
(instruction 2 associated with user B) user B's instruction to move the pointer up,
   in accordance with this user B's instruction, the pointer is moved upward so that one split pointer is displayed as the split pointer @t3, 204.

Note that, after the processing of step S111, step S105, or step S106, the processing from step S101 is repeatedly executed in accordance with an input of a new user's instruction.

As described above, the information processing apparatus 10 of the present disclosure individually recognizes instructions for each user, and individually executes the corresponding instructions in parallel. That is, it is possible to execute a plurality of pieces of processing in parallel in accordance with the intention of each user, allowing each of the users to be provided with information and processing that reflect the request of the corresponding user.

### [4. Specific example of processing of updating information displayed on image output unit (display unit)]

Next, specific examples of a case of updating display information such as processing of splitting and displaying, enlarging and displaying, or selecting and displaying display information displayed on the image output unit (display unit) 122 in accordance with a user's instruction to the information processing apparatus 10 will be described.

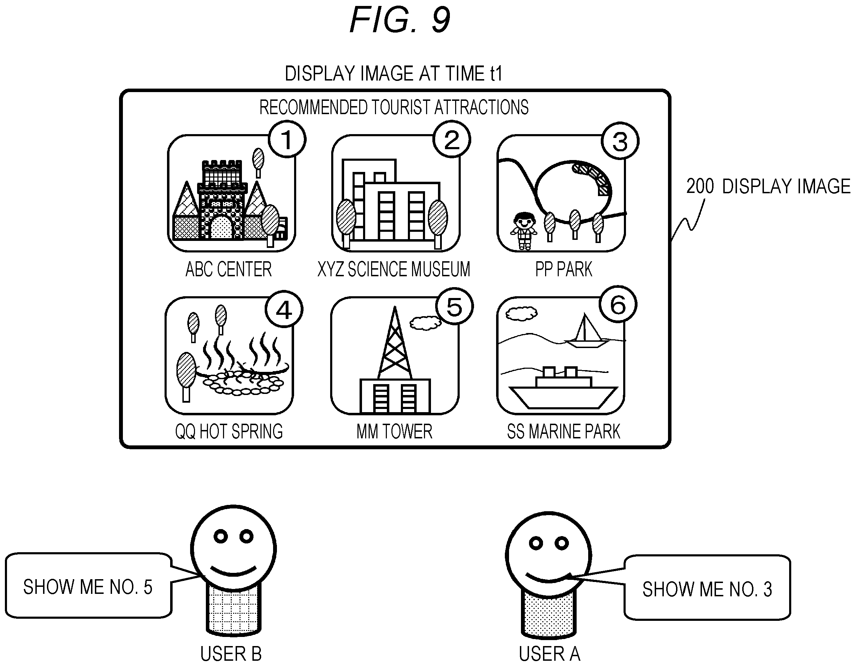

Fig. 9 illustrates an example of the display image 200 at time t1 of the image output unit (display unit) 122 of the information processing apparatus 10.

In front of the display image 200, there are two users, user A and user B.

These users have been identified by the user identification unit 171. That is, both users A and B are users registered in the user information DB 172, and the information processing apparatus 10 recognizes that the users viewing the display image 200 are user A and user B.

The information processing apparatus 10 displays, as the display image 200, representative images of six tourist attractions as candidate places for recommended tourist attractions, together with index numbers 1 to 6. This display information 200 is display data generated by a tourist guide application executed in the processing execution unit 174.

In accordance with the tourist guide application executed in the processing execution unit 174, the information processing apparatus 10 outputs, for example, the following system's utterance via the voice output unit (speaker) 121.

System's utterance: "Designate a tourist attraction you like"

In response to this system's utterance, the two users A and B make the corresponding utterances described below.

User's utterance by user A: "Show me No. 3"

User's utterance by user B: "Show me No. 5"

On the basis of results of voice recognition of these users' utterances, the information processing apparatus 10 recognizes that user A is giving an instruction requesting to display detailed information of the tourist attraction No. 3, and user B is giving an instruction requesting to display detailed information of the tourist attraction No. 5.

That is, the user-associated instruction analysis unit 173 of the processing control unit 170 of the information processing apparatus 10 recognizes that the following two different instructions have been given as user-associated instructions to the information processing apparatus 10.
(Instruction 1 associated with user A) user A's instruction to display detailed information of the tourist attraction No. 3
(Instruction 2 associated with user B) user B's instruction to display detailed information of the tourist attraction No. 5

The user-associated instruction analysis unit 173 of the processing control unit 170 of the information processing apparatus 10 recognizes that these two different instructions are being given by two different users, and inputs these two different pieces of user-associated instruction information to the processing execution unit 174.

The processing execution unit 174 executes processing in accordance with the two different user-associated instructions analyzed by the user-associated instruction analysis unit 173.

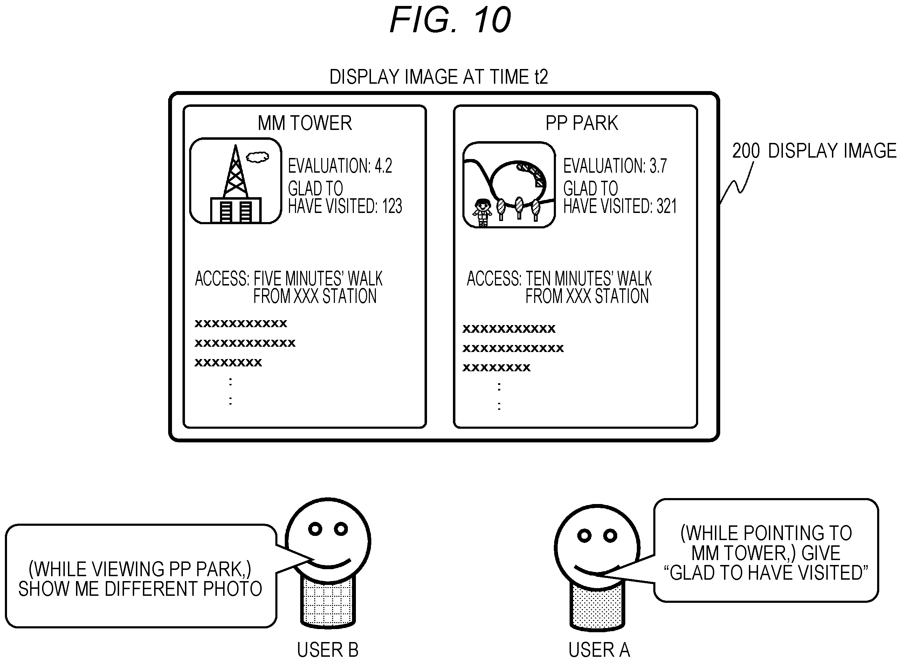

That is, as illustrated in Fig. 10, a display area of the display image 200 is divided into two, in which the right side divided area that is closer to user A displays the detailed information of the tourist attraction No. 3 in accordance with the user A's instruction, and the left side divided area that is closer to user B displays the detailed information of the tourist attraction No. 5 in accordance with the user B's instruction. The display image 200 illustrated in Fig. 10 is a display image at time t2.

Note that positions of user A and user B are acquired from a result of analysis by the image analysis unit 162 based on an image captured by the image input unit (camera) 112.

The user-associated instruction analysis unit 173 generates and outputs, to the processing execution unit 174, user-associated instruction information including user position information.

That is, specifically, for example, the following data sets (1) and (2) are generated as user-associated instruction information and output to the processing execution unit 174.
(1) Data in which user A's position information and user A's instruction information are associated with each other
(2) Data in which user B's position information and user B's instruction information are associated with each other

The processing execution unit 174 inputs the instruction information for each user including the position information for each user, determines processing to be executed, and executes the determined processing.

As a result, as illustrated in Fig. 10, the detailed information of the tourist attraction No. 3 in accordance with the user A's instruction is displayed in the right side area where user A is located, and the detailed information of the tourist attraction No. 5 in accordance with the user B's instruction is displayed in the left side area where user B is located.

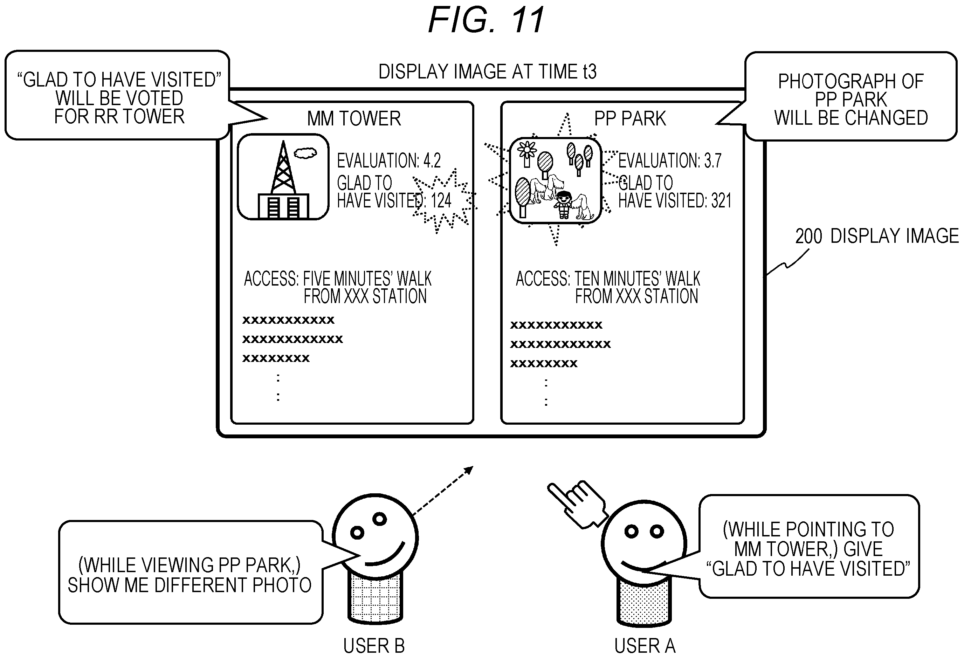

Moreover, Fig. 11 is a diagram illustrating an example of processing of updating the display image 200 at time t3.

At time t3, user A and user B are making users' utterances with actions described below.

### User A

User A's action: While pointing to "MM Tower" displayed on the left side,
User A's utterance: "Glad to have visited"

### User B

User B's action: While viewing "PP Park" displayed on the right side,
User B's utterance: "Show me a different photo"

The user-associated instruction analysis unit 173 acquires user action information such as pointing or a face/line-of-sight direction of user A and user B from a result of analysis by the image analysis unit 162 based on an image captured by the image input unit (camera) 112, and generates and outputs, to the processing execution unit 174, user-associated instruction information including user action information. That is, specifically, for example, the following data sets (1) and (2) are generated as user-associated instruction information and output to the processing execution unit 174.
(1) Data in which user A's action information (pointing and its direction) and user A's instruction information are associated with each other
(2) Data in which user B's action information (face/line-of-sight direction) and user B's instruction information are associated with each other

Specifically, the following data sets (1) and (2) are generated as user-associated instruction information and output to the processing execution unit 174.
(1) User A: while pointing to a display image (detailed information of MM Tower) on the left side of the display image, a user's utterance: an instruction to vote "glad to have visited"
(2) User B: while viewing a display image (detailed information of PP Park) on the right side of the display image, a user's utterance: an instruction "show me a different photo"

The processing execution unit 174 inputs the instruction information for each user including the action information for each user, determines processing to be executed, and executes the determined processing.

As a result, as illustrated in Fig. 11, a vote is given to a voting item [glad to have visited] in the detailed information of MM Tower, which is in a direction that user A is pointing, and the number of votes is incremented by one.

Furthermore, an image update is executed in which a photograph displayed in the detailed information of PP Park, which is in a direction that user B is viewing, is switched to a new photograph.

As described above, the information processing apparatus of the present disclosure analyzes a position and action information of each user, and further executes in parallel pieces of processing in accordance with the positions and actions of the corresponding users. Performing such processing allows each user to immediately acquire information or execute processing in which the corresponding instruction is reflected, without waiting for completion of processing for one user.

Next, as an embodiment of executing processing in which an instruction of each of a plurality of users is reflected, an embodiment in a case where instructions of a plurality of users agree with each other will be described.

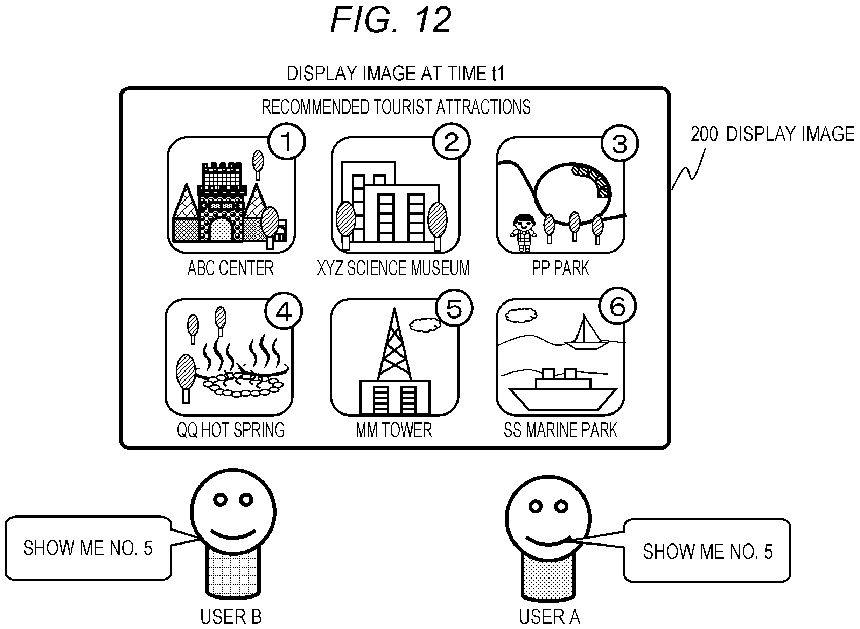

In a similar manner to Fig. 9 described above, Fig. 12 illustrates an example of the display image 200 at time t1 of the image output unit (display unit) 122 of the information processing apparatus 10.

In front of the display image 200, there are two users, user A and user B.

These users have been identified by the user identification unit 171. That is, both users A and B are users registered in the user information DB 172, and the information processing apparatus 10 recognizes that the users viewing the display image 200 are user A and user B.

The information processing apparatus 10 displays, as the display image 200, representative images of six tourist attractions as candidate places for recommended tourist attractions, together with index numbers 1 to 6. This display information 200 is display data generated by a tourist guide application executed in the processing execution unit 174.

In accordance with the tourist guide application executed in the processing execution unit 174, the information processing apparatus 10 outputs, for example, the following system's utterance via the voice output unit (speaker) 121.

System's utterance: "Designate a tourist attraction you like"

In response to this system's utterance, the two users A and B make the corresponding utterances described below.

User's utterance by user A: "Show me No. 5"

User's utterance by user B: "Show me No. 5"

On the basis of results of voice recognition of these users' utterances, the information processing apparatus 10 recognizes that user A is giving an instruction requesting to display detailed information of the tourist attraction No. 5, and user B is also giving an instruction requesting to display detailed information of the tourist attraction No. 5.

That is, the user-associated instruction analysis unit 173 of the processing control unit 170 of the information processing apparatus 10 recognizes that the following two instructions have been given as user-associated instructions to the information processing apparatus 10.
(Instruction 1 associated with user A) user A's instruction to display detailed information of the tourist attraction No. 5
(Instruction 2 associated with user B) user B's instruction to display detailed information of the tourist attraction No. 5

The user-associated instruction analysis unit 173 of the processing control unit 170 of the information processing apparatus 10 recognizes the instructions (the same instruction) of the two different users, and inputs these two pieces of user-associated instruction information to the processing execution unit 174.

The processing execution unit 174 executes processing in accordance with the two users' instructions (the same instruction) analyzed by the user-associated instruction analysis unit 173.

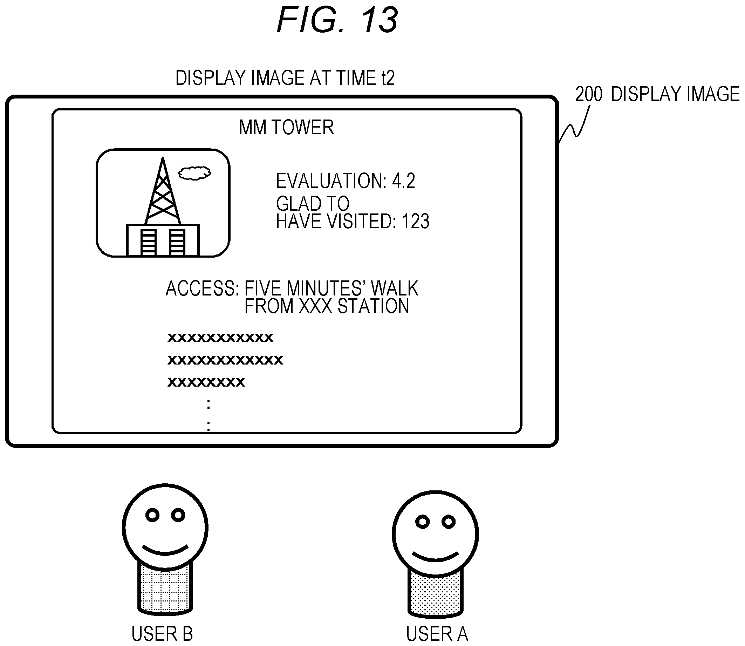

That is, as illustrated in Fig. 13, detailed information of the tourist attraction No. 5 is displayed in the entire display area of the display image 200 in accordance with the two users' instructions (the same instruction). The display image 200 illustrated in Fig. 13 is a display image at time t2.

As described above, in a case where instructions of a plurality of users are the same, the information processing apparatus 10 of the present disclosure executes one piece of processing in which the instruction of each user is reflected. That is, for example, the display area is not divided to display the same information side by side, but processing of outputting one piece of information to the entire display area is performed.

Next, as an embodiment of executing processing in which an instruction of each of a plurality of users is reflected, an embodiment of performing processing based on a voting result of a plurality of users will be described.

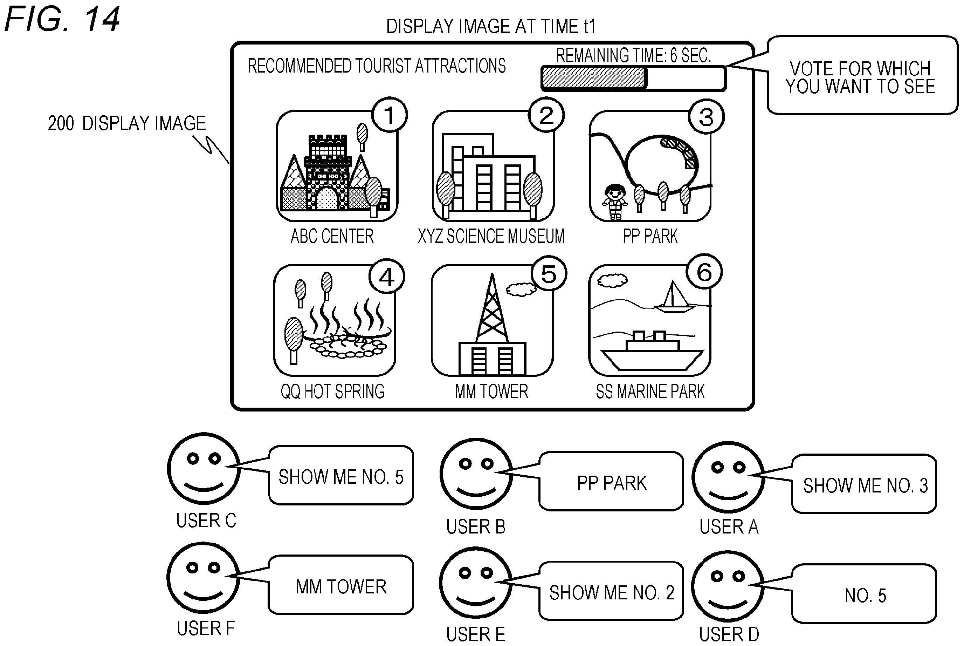

In a similar manner to Fig. 9 described above, Fig. 14 illustrates an example of the display image 200 at time t1 of the image output unit (display unit) 122 of the information processing apparatus 10.

In front of the display image 200, there are six users, user A to user F.

These users have been identified by the user identification unit 171. That is, users A to D are all users registered in the user information DB 172, and the information processing apparatus 10 recognizes that the users viewing the display image 200 are user A to user F.

However, it is not always necessary that all users are users registered in the user information DB 172 in advance. For example, in a case where a user who is not registered in the user information DB 172 is detected from an image captured by the image input unit (camera) 112, the user identification unit 171 registers the new user, in association with a new user ID, together with a face image and position information in the user information DB 172. This registration information is used to execute the processing that follows.

As illustrated in Fig. 14, the information processing apparatus 10 displays, as the display image 200, representative images of six tourist attractions as candidate places for recommended tourist attractions, together with index numbers 1 to 6. This display information 200 is display data generated by a tourist guide application executed in the processing execution unit 174.

In accordance with the tourist guide application executed in the processing execution unit 174, the information processing apparatus 10 outputs, for example, the following system's utterance via the voice output unit (speaker) 121.

System's utterance: "Vote for which you want to see"

The processing execution unit 174 further displays, together with the output of this system's utterance, a bar indicator indicating the remaining time before the voting deadline on the display image 200, and performs indicator update processing to gradually reduce the remaining time displayed by the indicator as time passes.

In response to the system's utterance, the six users A to F make the corresponding utterances, that is, votes described below.

User's utterance (vote) by user A: "Show me No. 3"

User's utterance (vote) by user B: "PP Park"

User's utterance (vote) by user A: "Show me No. 5"

User's utterance (vote) by user B: "No. 5"

User's utterance (vote) by user A: "Show me No. 2"

User's utterance (vote) by user B: "MM Tower"

On the basis of results of voice recognition of these users' utterances, the information processing apparatus 10 analyzes the utterances of the user A to user F, that is, the votes obtained, and counts the number of votes for each of the tourist attractions 1 to 6.

Note that the voice analysis unit 161 executes voice recognition of each user's utterance, and the user-associated instruction analysis unit 173 analyzes which user made which utterance.

User-associated instruction information (voting information), which is a result of analysis by the user-associated instruction analysis unit 173, is input to the processing execution unit 174.

The processing execution unit 174 counts the number of votes for each of the tourist attractions 1 to 6 by processing of the application being executed.

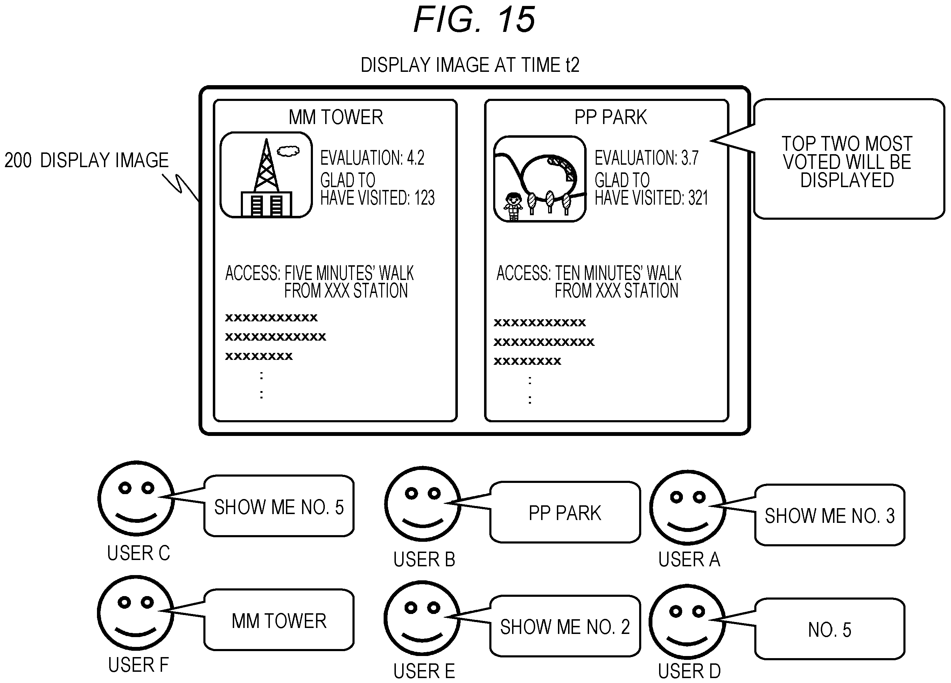

In accordance with a result of this processing of counting the number of votes, the processing execution unit 174 performs processing of updating the display image as illustrated in Fig. 15.

That is, as illustrated in Fig. 15, the display area of the display image 200 is divided into two, and pieces of detailed information of the top two tourist attractions that have been voted most are displayed side by side. Moreover, in this processing of updating display information, the following system's utterance is output.

System's utterance: The top two most voted will be displayed.

As described above, the information processing apparatus 10 of the present disclosure can not only execute in parallel all pieces of processing in accordance with instructions of a large number of users, but also perform processing of, for example, selecting an instruction given by a larger number of users and performing processing in accordance with the selected instruction.

These can be achieved by analyzing all the individual instructions of the corresponding users.

Next, a processing sequence of the processing described with reference to Figs. 9 to 15 will be described with reference to a flowchart.

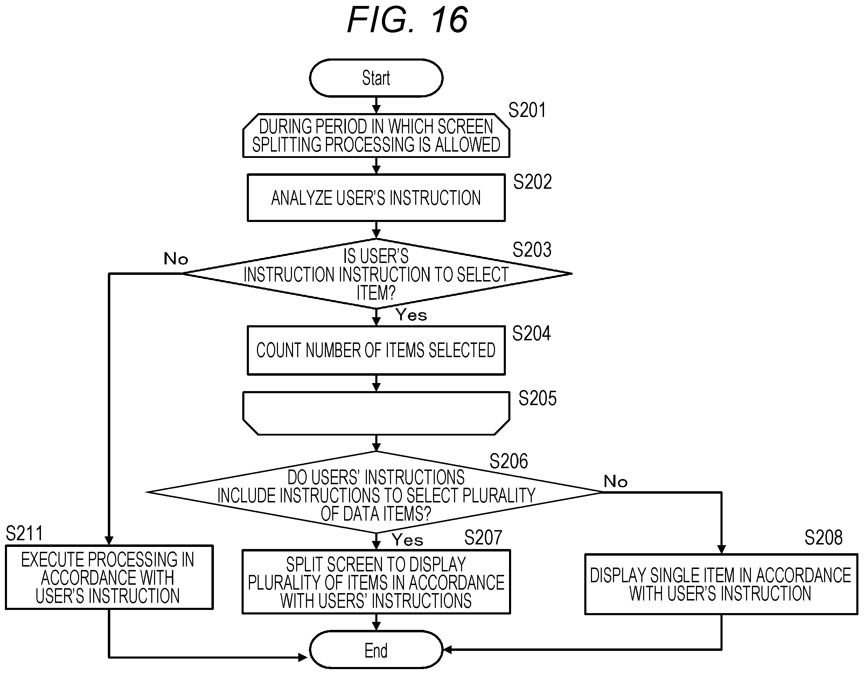

First, with reference to a flowchart illustrated in Fig. 16, a processing sequence of splitting a screen in accordance with users' instructions and outputting pieces of information in response to the user's instructions to the corresponding split areas will be described.

Note that the processing illustrated in the flow in Fig. 16 can be executed in accordance with a program stored in the storage unit of the information processing apparatus 10, and can be performed as, for example, program execution processing by a processor such as a CPU having a program execution function.

The processing of each step of the flow illustrated in Fig. 16 will be described below.

### (Step S201)

The processing of steps S201 to S205 is performed during a period in which screen splitting processing is allowed, the period being defined by an application being executed in the processing execution unit 174.

### (Step S202)

In step S202, processing of analyzing a user's instruction given to the information processing apparatus 10 is executed.

This processing of analyzing the user's instruction is performed by the input data analysis unit 160 and the processing control unit 170.

The user's instruction can be given by a variety of user actions such as a user's utterance, pointing, a face direction, and a movement of a line-of-sight.

The voice analysis unit 161 of the input data analysis unit 160 analyzes a user's utterance input via the voice input unit (microphone) 111 to analyze whether or not a user's instruction has been given, the intention of the user's instruction, and the like.

Furthermore, the image analysis unit 162 of the input data analysis unit 160 analyzes an image of the user input via the image input unit (camera) 112 to analyze whether or not a user's instruction has been given, the intention of the user's instruction, and the like on the basis of a user action such as pointing.

This analysis information is input to the user identification unit 171 and the user-associated instruction analysis unit 173 of the processing control unit 170.

### (Step S203)

In step S203, on the basis of the analysis result, the input data analysis unit 160 determines whether or not the user's instruction is an instruction to select an option, that is, an instruction to select a data item being displayed.

For example, the display image 200 described above with reference to Fig. 9 can be taken as an example. That is, representative images of six tourist attractions are displayed as candidate places for recommended tourist attractions, together with index numbers 1 to 6. In this case, a user can select from the index numbers 1 to 6, titles of the corresponding images, or the like.

If it is determined in step S203 that the user's instruction is an instruction to select an option, that is, an instruction to select a data item, the processing proceeds to step S205.

If it is determined that the user's instruction is not an instruction to select a data item, the process proceeds to step S211.

### (Step S211)

First, the processing of step S211 will be described.

Step S211 is processing executed if the user's instruction is not an instruction to select a data item in step S203.

If the user's instruction is not an instruction to select a data item, in step S211, processing in accordance with the user's instruction that is not an instruction to select a data item is executed.

This processing is executed by the processing execution unit 174 in accordance with user-associated instruction information analyzed by the user-associated instruction analysis unit 173.

As described previously, the user-associated instruction analysis unit 173 associates user identification information obtained from identification by the user identification unit 171 with information regarding instructions to the information processing apparatus 10 obtained on the basis of analysis information from the voice analysis unit 161 and the image analysis unit 162 of the input data analysis unit 160, and analyzes the information regarding the instructions associated with the corresponding users.

For example,
(1) instruction a of user A
(2) instruction b of user B
as described above, for each instruction, processing is performed to determine which user has given the instruction. Specifically, data in which a user ID and instruction information are associated with each other, that is, user-associated instruction information is generated and input to the processing execution unit 174.

The processing execution unit 174 executes processing in accordance with the user-associated instruction information analyzed by the user-associated instruction analysis unit 173.

Specifically, for example, an application that executes processing in accordance with a user's instruction is selected from the application group 175 and executed. Note that these applications are not limited to applications stored in the storage unit in the information processing apparatus 10, and may be applications provided by an external server.

### (Step S204)

Next, the processing of step S204 will be described.

Step S204 is processing executed if the user's instruction is an instruction to select a data item in step S203.

If the user's instruction is an instruction to select a data item, the number of data items selected by users' instructions is counted in step S204.

### (Step S205)

As described previously, the processing of steps S201 to S205 is performed during a period in which screen splitting processing is allowed, the period being defined by an application being executed in the processing execution unit 174.

At least one user viewing the display image on the information processing apparatus 10 gives an instruction to select a data item during this period, at least one instruction to select a data item is input, and the number of items to be selected is counted.

### (Step S206)

When the period of processing of steps S201 to S205 has elapsed, the processing proceeds to step S206.

In step S206, it is determined whether or not the users' instructions given during the period of processing of steps S201 to S205 include instructions to select a plurality of data items.

A case where instructions to select a plurality of data items are included indicates a case where, for example, each of users A and B has designated a different index number (data item) as described above with reference to Fig. 9. In a similar manner, the example illustrated in Fig. 14 also corresponds to a case where instructions to select a plurality of data items are included.

On the other hand, a case where the users' instructions do not include instructions to select a plurality of data items indicates a case where, for example, as described above with reference to Fig. 12, users A and B have designated the same index number (data item).

If the users' instructions include instructions to select a plurality of data items, the processing proceeds to step S207. On the other hand, if the users' instructions do not include instructions to select a plurality of data items, the processing proceeds to step S208.

### (Step S207)

If the users' instructions include instructions to select a plurality of data items in the determination processing of step S206, the processing proceeds to step S207.

In step S207, the processing execution unit 174 splits the display area of the display image into a plurality of areas, and displays information in accordance with the instruction of each user in the corresponding split area.

Note that, in this display processing, in consideration of user positions, information in response to a user's instruction is displayed in a split area closer to the user who has given the user's instruction.

This is the processing described above with reference to Fig. 10. The user-associated instruction analysis unit 173 generates and outputs, to the processing execution unit 174, user-associated instruction information including user position information acquired from a result of analysis by the image analysis unit 162 based on an image captured by the image input unit (camera) 112.

The processing execution unit 174 inputs the instruction information for each user including the position information for each user, determines processing to be executed, and executes the determined processing. As a result, as illustrated in Fig. 10, information in accordance with the user A's instruction is displayed in the right side area where user A is located, and information in accordance with the user B's instruction is displayed in the left side area where user B is located.

Note that, as described above with reference to Figs. 14 and 15, a configuration may be adopted in which, in a case where users' instructions include a large number of data items, only a data item ranked highest among the large number of data items is selected and displayed.

### (Step S208)

The processing of step S208 is executed in a case where the users' instructions do not include instructions to select a plurality of data items in the determination processing of step S206.

In step S208, the processing execution unit 174 displays one piece of information in accordance with the user's instruction without splitting the display area of the display image.

This processing corresponds to the processing described above with reference to Figs. 12 and 13.

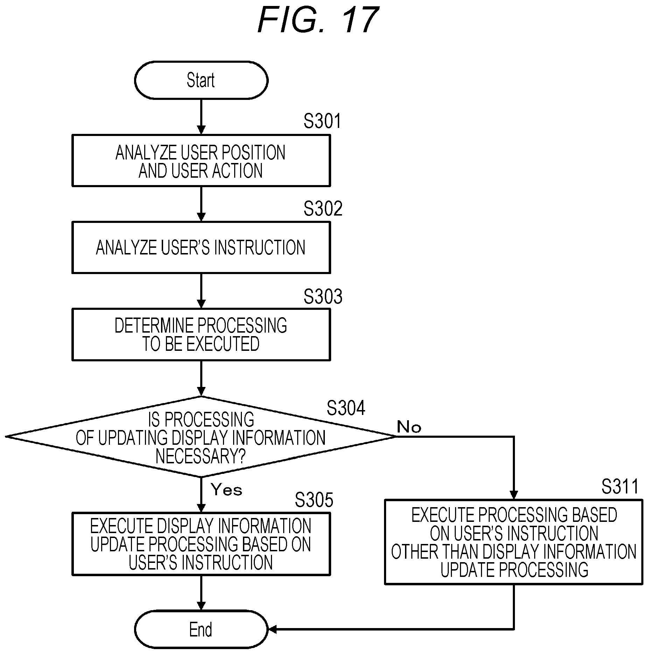

Next, with reference to a flow illustrated in Fig. 17, a sequence of analyzing a user position and a user action and controlling output information such as a display image will be described.

The processing illustrated in the flowchart in Fig. 17 can be executed in accordance with a program stored in the storage unit of the information processing apparatus 10, and can be performed as, for example, program execution processing by a processor such as a CPU having a program execution function.

The processing of each step of the flow illustrated in Fig. 17 will be described below.

### (Step S301)

First, in step S301, a user position and a user action are analyzed. These pieces of analysis processing are executed in the image analysis unit 162 and the user-associated instruction analysis unit 173.

Note that a user action is, for example, pointing by a user or face/line-of-sight direction movement processing described above with reference to Fig. 11.

The image analysis unit 162 performs image analysis based on an image captured by the image input unit (camera) 112, and a result of this analysis is input to the user-associated instruction analysis unit 173.

The user-associated instruction analysis unit 173 generates and outputs, to the processing execution unit 174, user-associated instruction information including user position information and user action information.

### (Step S302)

Next, in step S3202, processing of analyzing a user's instruction given to the information processing apparatus 10 is executed.

This processing of analyzing the user's instruction is performed by the input data analysis unit 160 and the processing control unit 170.

The user's instruction can be given by not only a user's utterance but also a variety of user actions such as pointing by a user, a face direction, and a movement of a line-of-sight analyzed in step SZ301.

The voice analysis unit 161 of the input data analysis unit 160 analyzes a user's utterance input via the voice input unit (microphone) 111 to analyze whether or not a user's instruction has been given, the intention of the user's instruction, and the like.

Furthermore, the image analysis unit 162 of the input data analysis unit 160 analyzes an image of the user input via the image input unit (camera) 112 to analyze whether or not a user's instruction has been given, the intention of the user's instruction, and the like on the basis of a user action such as pointing.

This analysis information is input to the user identification unit 171 and the user-associated instruction analysis unit 173 of the processing control unit 170.

### (Step S303)

Next, processing to be executed is determined. This processing is executed by the user-associated instruction analysis unit 173 and the processing execution unit 174.

The user-associated instruction analysis unit 173 generates and outputs, to the processing execution unit 174, user-associated instruction information in which the user position, the user action, and the user's instruction are associated with each other.

The processing execution unit 174 determines processing to be executed on the basis of the user-associated instruction information input from the user-associated instruction analysis unit 173, that is, the user-associated instruction information in which the user position, the user action, and the user's instruction are associated with each other.

For example, in a case where user position information has been added to the user-associated instruction information, a position to display each piece of display information is determined on the basis of the user position, as described above with reference to Fig. 10.

Furthermore, in a case where user action information has been added to the user-associated instruction information, a mode of processing of updating display information is determined on the basis of the user action, as described above with reference to Fig. 11.

### (Step S304)

Next, in step S304, it is determined whether or not processing of updating display information is included in the processing to be executed determined in step S303.

If the processing of updating display information is included, the processing proceeds to step S206S305. If not, the processing proceeds to step S311.

### (Step S311)

First, the processing of step S311 will be described.

Step S311 is processing executed if processing of updating display information is not included in the determined processing to be executed in step S304.

In this case, in step S311, processing other than a display information update is executed in accordance with the user's instruction.

Examples of such processing include processing of outputting a system's utterance in response to the user's instruction. This processing is executed by the processing execution unit 174 in accordance with user-associated instruction information analyzed by the user-associated instruction analysis unit 173.

### (Step S305)

Next, the processing of step S305 will be described.

Step S305 is processing executed if processing of updating display information is included in the determined processing to be executed in step S304.

In this case, in step S305, display information update processing based on the user's instruction is executed.

Specifically, for example, as described above with reference to Fig. 10, images are displayed in split areas in which the position to display each piece of display information is set on the basis of the user positions.

Alternatively, as described above with reference to Fig. 11, processing of updating display information is executed on the basis of the user actions.

As described above, the information processing apparatus of the present disclosure analyzes a position and action information of each user, and further executes in parallel pieces of processing in accordance with the positions and actions of the corresponding users. Performing such processing allows each user to immediately acquire information or execute processing in which the corresponding instruction is reflected, without waiting for completion of processing for one user.

### [5. Information processing apparatus, and configuration example of information processing system]

Processing functions of the components of the information processing apparatus 10 illustrated in Fig. 3 can all be included in one device, for example, agent equipment owned by a user or a device such as a smartphone or a PC. Alternatively, it is also possible to adopt a configuration in which some of them are executed in a server or the like.

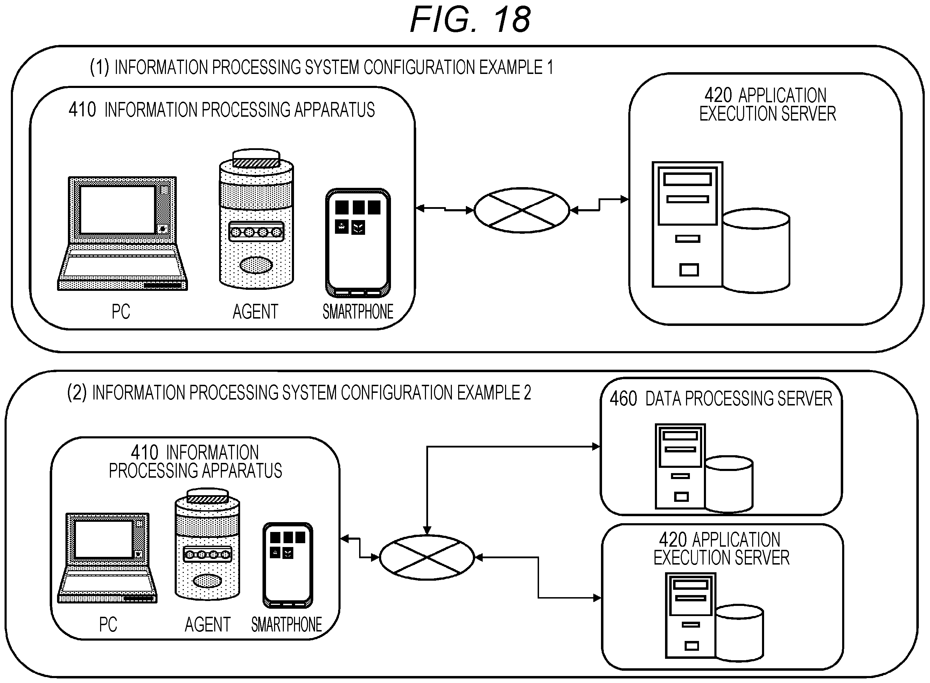

Fig. 18 illustrates an example of a system configuration for executing the processing of the present disclosure.

Information processing system configuration example 1 in Fig. 18(1) is an example in which almost all the functions of the information processing apparatus illustrated in Fig. 3 are included in one device, for example, a smartphone or a PC owned by a user, or an information processing apparatus 410, which is a user terminal such as agent equipment having voice input/output and image input/output functions.

The information processing apparatus 410 corresponding to a user terminal executes communication with an application execution server 420 only in a case where an external application is used to generate a response sentence, for example.

The application execution server 420 is, for example, a weather information providing server, a traffic information providing server, a medical information providing server, a tourism information providing server, or the like, and is constituted by a server group capable of providing information for generating a response to a user's utterance.

On the other hand, information processing system configuration example 2 in Fig. 18(2) is an example of a system having a configuration in which some of the functions of the information processing apparatus illustrated in Fig. 3 are included in the information processing apparatus 410, which is an information processing terminal such as a smartphone, a PC, or agent equipment owned by a user, and some are executed in a data processing server 460 capable of communicating with the information processing apparatus.

For example, it is possible to adopt a configuration in which pieces of processing that are executed by the voice recognition unit 110, the image analysis unit 120, and the processing control unit 170 in the apparatus illustrated in Fig. 3 are executed on a server side. Settings are configured so that data acquired by a voice input unit 101 and an imaging unit 102 on the information processing apparatus 410 side, which is on the information processing terminal side, is transmitted to a server, processing is performed on a user's instruction on the server side, and a result of the processing is returned to the information processing apparatus 410 on the information processing terminal side.

As a specific configuration example, for example, the following configuration is possible. An information processing system includes an information processing terminal and a server, and the information processing terminal includes a voice input unit, an image input unit, a voice output unit, an image output unit, and a communication unit.

The server executes in parallel a plurality of pieces of processing for corresponding instructions from a plurality of users to the information processing terminal on the basis of data received from the information processing terminal, and transmits a processing result to the information processing terminal. The information processing terminal outputs the processing result received from the server to the voice output unit and the image output unit.

Note that, in this configuration, the server includes a user-associated instruction analysis unit that generates, for every instruction from a plurality of users to the information processing terminal, user-associated instruction information associated with the users who have given the corresponding instructions, and a processing execution unit that inputs the user-associated instruction information and executes in parallel a plurality of pieces of processing for the corresponding users' instructions on the basis of the user-associated instruction information.

For example, such a system configuration is possible.

Note that, as a mode of allotment of functions to the information processing terminal side such as a user terminal and to the server side, a variety of different settings are possible, and it is also possible to adopt a configuration in which one function is executed by both sides.

### [6. Hardware configuration example of information processing apparatus]

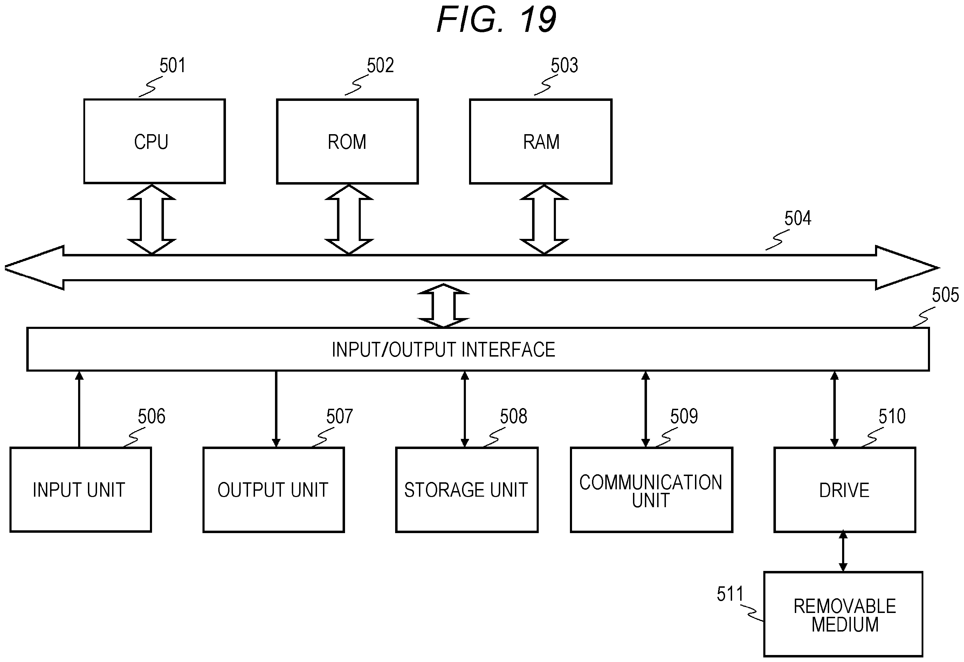

Next, a hardware configuration example of the information processing apparatus will be described with reference to Fig. 19.

The hardware described with reference to Fig. 19 is an example of the hardware configuration of the information processing apparatus described above with reference to Fig. 3, and is also an example of the hardware configuration of the information processing apparatus constituting the data processing server 460 described with reference to Fig. 18.

A central processing unit (CPU) 501 functions as a control unit or a data processing unit that executes various types of processing in accordance with a program stored in a read only memory (ROM) 502 or a storage unit 508. For example, processing is executed in accordance with the sequences described in the above embodiment. A random access memory (RAM) 503 stores a program to be executed by the CPU 501, data, and the like. These CPU 501, ROM 502, and RAM 503 are connected to each other by a bus 504.

The CPU 501 is connected to an input/output interface 505 via the bus 504, and the input/output interface 505 is connected with an input unit 506 constituted by various switches, a keyboard, a mouse, a microphone, a sensor, or the like, and an output unit 507 constituted by a display, a speaker, or the like. The CPU 501 executes various types of processing in response to a command input from the input unit 506, and outputs a result of the processing to, for example, the output unit 507.

The storage unit 508 connected to the input/output interface 505 is constituted by, for example, a hard disk, and stores a program to be executed by the CPU 501 and various types of data. A communication unit 509 functions as a transmission/reception unit for Wi-Fi communication, Bluetooth (registered trademark) (BT) communication, or other data communications via a network such as the Internet or a local area network, and communicates with an external device.

A drive 510 connected to the input/output interface 505 drives a removable medium 511 such as a magnetic disk, an optical disk, a magneto-optical disk, or a semiconductor memory such as a memory card to record or read data.

### [7. Summary of configuration of present disclosure]

The embodiment of the present disclosure has been described above in detail with reference to the specific embodiment. However, it is obvious that those skilled in the art may make modifications and substitutions to the embodiment without departing from the gist of the present disclosure. That is, the present invention has been disclosed in the form of exemplification and should not be interpreted restrictively. In order to determine the gist of the present disclosure, the claims should be taken into consideration.

Note that the technique disclosed in the present specification may have the following configurations.
(1) An information processing apparatus including:
   a user-associated instruction analysis unit that generates, for every instruction from a plurality of users to an information processing apparatus, user-associated instruction information associated with a user who has given the corresponding instruction; and
   a processing execution unit that executes in parallel a plurality of pieces of processing for the corresponding users' instructions on the basis of the user-associated instruction information.
(2) The information processing apparatus according to (1), further including:
   a voice recognition unit that executes processing of analyzing voice input via a voice input unit;
   an image analysis unit that executes processing of analyzing a captured image input via an imaging unit; and
   a user identification unit that executes user identification using at least one of the voice recognition unit or the image analysis unit,
   in which the user-associated instruction analysis unit uses user identification information generated by the user identification unit to generate the user-associated instruction information.
(3) The information processing apparatus according to (1) or (2), in which
   the instructions from the plurality of users to the information processing apparatus are instructions to move a pointer on a display image of the information processing apparatus in different directions,
   the user-associated instruction analysis unit generates, as user-associated instruction information, information regarding the instruction to move the pointer in a different direction for each user, and
   the processing execution unit executes processing of splitting the pointer on the display image on the basis of the information regarding the instruction to move the pointer in a different direction for each user, and moving a plurality of the pointers in the directions instructed by the corresponding users.
(4) The information processing apparatus according to (1) or (2), in which
   the instructions from the plurality of users to the information processing apparatus are instructions to select different options to the information processing apparatus,
   the user-associated instruction analysis unit generates, as user-associated instruction information, information regarding the instruction to select a different option for each user, and
   the processing execution unit executes in parallel pieces of processing corresponding to the options of the corresponding users on the basis of the information regarding the instruction to select a different option for each user.
(5) The information processing apparatus according to (4), in which
   the processing execution unit splits a display image of the information processing apparatus on the basis of the information regarding the instruction to select a different option for each user, and displays in parallel pieces of information corresponding to the options of the corresponding users.
(6) The information processing apparatus according to (5), in which
   the processing execution unit executes processing of controlling an information display position in accordance with a user position, and executes a control of displaying information selected by a user at a position close to a position of the user.
(7) The information processing apparatus according to (4), in which
   the processing execution unit displays, in a case where information regarding a selection instruction for each user is constituted by the same option, only one piece of information corresponding to that same option.
(8) The information processing apparatus according to (4), in which
   the processing execution unit executes processing in which, on the basis of the information regarding the instruction to select a different option for each user, information corresponding to an option selected by a larger number of users is preferentially selected.
(9) The information processing apparatus according to any one of (1) to (8), in which
   the user-associated instruction analysis unit generates user-associated instruction information in which a user position and a user's instruction are associated with each other, and
   the processing execution unit displays, on the basis of user position information included in the user-associated instruction information, information corresponding to a user's instruction at a position close to the user who has given the instruction.
(10) The information processing apparatus according to any one of (1) to (9), in which
   the user-associated instruction analysis unit generates user-associated instruction information in which a user action and a user's instruction are associated with each other, and
   the processing execution unit determines a processing target on the basis of user action information included in the user-associated instruction information.
(11) An information processing system including an information processing terminal and a server, in which
   the information processing terminal includes
   a voice input unit, an image input unit,
   a voice output unit, an image output unit, and
   a communication unit that transmits, to the server, voice acquired via the voice input unit and a captured image acquired via the image input unit,
   the server executes in parallel, on the basis of data received from the information processing terminal, a plurality of pieces of processing for corresponding instructions from a plurality of users to the information processing terminal, and transmits a processing result to the information processing terminal, and
   the information processing terminal outputs the processing result received from the server to at least one of the voice output unit or the image output unit.
(12) The information processing system according to (11), in which
   the server includes:
   a user-associated instruction analysis unit that generates, for every instruction from a plurality of users to the information processing terminal, user-associated instruction information associated with a user who has given the corresponding instruction; and
   a processing execution unit that executes in parallel a plurality of pieces of processing for the corresponding users' instructions on the basis of the user-associated instruction information.
(13) An information processing method executed in an information processing apparatus, the method including:
   a user-associated instruction analysis step of generating, by a user-associated instruction analysis unit, for every instruction from a plurality of users to an information processing apparatus, user-associated instruction information associated with a user who has given the corresponding instruction; and
   a processing execution step of executing in parallel, by a processing execution unit, a plurality of pieces of processing for the corresponding users' instructions on the basis of the user-associated instruction information.
(14) An information processing method executed in an information processing system including an information processing terminal and a server, in which
   the information processing terminal transmits, to the server, voice acquired via a voice input unit and a captured image acquired via an imaging unit,
   the server executes in parallel, on the basis of data received from the information processing terminal, a plurality of pieces of processing for corresponding instructions from a plurality of users to the information processing terminal, and transmits a processing result to the information processing terminal, and
   the information processing terminal outputs the processing result received from the server to at least one of a voice output unit or an image output unit.
(15) A program that causes information processing to be executed in an information processing apparatus, the program causing execution of:
   a user-associated instruction analysis step of causing a user-associated instruction analysis unit to generate, for every instruction from a plurality of users to an information processing apparatus, user-associated instruction information associated with a user who has given the corresponding instruction; and
   a processing execution step of causing a processing execution unit to execute in parallel a plurality of pieces of processing for the corresponding users' instructions on the basis of the user-associated instruction information.

Furthermore, the series of processing described in the specification can be executed by hardware, software, or a combination of both. In a case where the processing is executed by software, it is possible to install a program in which a processing sequence has been recorded on a memory in a computer built in dedicated hardware and execute the program, or it is possible to install a program on a general-purpose computer capable of executing various types of processing and execute the program. For example, the program can be recorded in a recording medium in advance. Besides being installed on a computer from a recording medium, the program can be received via a network such as a local area network (LAN) or the Internet and then installed on a recording medium such as a built-in hard disk.

Note that the various types of processing described in the specification may be executed not only in time series in accordance with the description but also in parallel or individually as needed or in accordance with a processing capability of the device that executes the processing. Furthermore, in the present specification, a system is a logical set configuration of a plurality of devices, and is not limited to one in which each configuration device is in the same housing.

### INDUSTRIAL APPLICABILITY

As described above, the configuration of the embodiment of the present disclosure enables achievement of an apparatus and a method for executing, in parallel without delay, pieces of processing for corresponding instructions from a plurality of users to an information processing apparatus.

Specifically, for example, a user-associated instruction analysis unit that generates, for every instruction from a plurality of users to an information processing apparatus, user-associated instruction information associated with the users who have given the corresponding instructions, and a processing execution unit that executes in parallel a plurality of pieces of processing for the corresponding users' instructions on the basis of the user-associated instruction information are included. In a case where the instructions from the plurality of users to the information processing apparatus are instructions to move a pointer in different directions, the processing execution unit executes processing of splitting the pointer and moving a plurality of the pointers in the directions instructed by the corresponding users. In a case where the users' instructions are instructions to select different options, a display area is split to allow pieces of information corresponding to the options of the corresponding users to be displayed in parallel.

The present configuration enables achievement of an apparatus and a method for executing, in parallel without delay, pieces of processing for corresponding instructions from a plurality of users to an information processing apparatus.

### REFERENCE SIGNS LIST

- 10: Information processing apparatus
- 11: Imaging unit
- 12: Microphone
- 13: Display unit
- 14: Speaker
- 20: Server
- 30: External equipment
- 110: Input unit
- 111: Voice input unit
- 112: Image input unit
- 120: Output unit
- 121: Voice output unit
- 122: Image output unit
- 150: Data processing unit
- 160: Input data analysis unit
- 161: Voice analysis unit
- 162: Image analysis unit
- 170: Processing control unit
- 171: User identification unit
- 172: User information DB
- 173: User-associated instruction analysis unit
- 174: Processing execution unit
- 175: Application group
- 180: Output control unit
- 181: Output voice control unit
- 182: Display information control unit
- 410: Information processing apparatus
- 420: Application execution server
- 460: Data processing server
- 501: CPU
- 502: ROM
- 503: RAM
- 504: Bus
- 505: Input/output interface
- 506: Input unit
- 507: Output unit
- 508: Storage unit
- 509: Communication unit
- 510: Drive
- 511: Removable medium

## Claims

1. An information processing apparatus comprising:
a user-associated instruction analysis unit that generates, for every instruction from a plurality of users to an information processing apparatus, user-associated instruction information associated with a user who has given the corresponding instruction; and
a processing execution unit that executes in parallel a plurality of pieces of processing for the corresponding users' instructions on a basis of the user-associated instruction information.

2. The information processing apparatus according to claim 1, further comprising:
a voice recognition unit that executes processing of analyzing voice input via a voice input unit;
an image analysis unit that executes processing of analyzing a captured image input via an imaging unit; and
a user identification unit that executes user identification using at least one of the voice recognition unit or the image analysis unit,
wherein the user-associated instruction analysis unit uses user identification information generated by the user identification unit to generate the user-associated instruction information.

3. The information processing apparatus according to claim 1, wherein
the instructions from the plurality of users to the information processing apparatus are instructions to move a pointer on a display image of the information processing apparatus in different directions,
the user-associated instruction analysis unit generates, as user-associated instruction information, information regarding the instruction to move the pointer in a different direction for each user, and
the processing execution unit executes processing of splitting the pointer on the display image on a basis of the information regarding the instruction to move the pointer in a different direction for each user, and moving a plurality of the pointers in the directions instructed by the corresponding users.

4. The information processing apparatus according to claim 1, wherein
the instructions from the plurality of users to the information processing apparatus are instructions to select different options to the information processing apparatus,
the user-associated instruction analysis unit generates, as user-associated instruction information, information regarding the instruction to select a different option for each user, and
the processing execution unit executes in parallel pieces of processing corresponding to the options of the corresponding users on a basis of the information regarding the instruction to select a different option for each user.

5. The information processing apparatus according to claim 4, wherein
the processing execution unit splits a display image of the information processing apparatus on a basis of the information regarding the instruction to select a different option for each user, and displays in parallel pieces of information corresponding to the options of the corresponding users.

6. The information processing apparatus according to claim 5, wherein
the processing execution unit executes processing of controlling an information display position in accordance with a user position, and executes a control of displaying information selected by a user at a position close to a position of the user.

7. The information processing apparatus according to claim 4, wherein
the processing execution unit displays, in a case where information regarding a selection instruction for each user is constituted by the same option, only one piece of information corresponding to that same option.

8. The information processing apparatus according to claim 4, wherein
the processing execution unit executes processing in which, on a basis of the information regarding the instruction to select a different option for each user, information corresponding to an option selected by a larger number of users is preferentially selected.

9. The information processing apparatus according to claim 1, wherein
the user-associated instruction analysis unit generates user-associated instruction information in which a user position and a user's instruction are associated with each other, and
the processing execution unit displays, on a basis of user position information included in the user-associated instruction information, information corresponding to a user's instruction at a position close to the user who has given the instruction.

10. The information processing apparatus according to claim 1, wherein
the user-associated instruction analysis unit generates user-associated instruction information in which a user action and a user's instruction are associated with each other, and
the processing execution unit determines a processing target on a basis of user action information included in the user-associated instruction information.

11. An information processing system comprising an information processing terminal and a server, wherein
the information processing terminal includes
a voice input unit, an image input unit,
a voice output unit, an image output unit, and
a communication unit that transmits, to the server, voice acquired via the voice input unit and a captured image acquired via the image input unit,
the server executes in parallel, on a basis of data received from the information processing terminal, a plurality of pieces of processing for corresponding instructions from a plurality of users to the information processing terminal, and transmits a processing result to the information processing terminal, and
the information processing terminal outputs the processing result received from the server to at least one of the voice output unit or the image output unit.

12. The information processing system according to claim 11, wherein
the server includes:
a user-associated instruction analysis unit that generates, for every instruction from a plurality of users to the information processing terminal, user-associated instruction information associated with a user who has given the corresponding instruction; and
a processing execution unit that executes in parallel a plurality of pieces of processing for the corresponding users' instructions on a basis of the user-associated instruction information.

13. An information processing method executed in an information processing apparatus, the method comprising:
a user-associated instruction analysis step of generating, by a user-associated instruction analysis unit, for every instruction from a plurality of users to an information processing apparatus, user-associated instruction information associated with a user who has given the corresponding instruction; and
a processing execution step of executing in parallel, by a processing execution unit, a plurality of pieces of processing for the corresponding users' instructions on a basis of the user-associated instruction information.

14. An information processing method executed in an information processing system comprising an information processing terminal and a server, wherein
the information processing terminal transmits, to the server, voice acquired via a voice input unit and a captured image acquired via an imaging unit,
the server executes in parallel, on a basis of data received from the information processing terminal, a plurality of pieces of processing for corresponding instructions from a plurality of users to the information processing terminal, and transmits a processing result to the information processing terminal, and
the information processing terminal outputs the processing result received from the server to at least one of a voice output unit or an image output unit.

15. A program that causes information processing to be executed in an information processing apparatus, the program causing execution of:
a user-associated instruction analysis step of causing a user-associated instruction analysis unit to generate, for every instruction from a plurality of users to an information processing apparatus, user-associated instruction information associated with a user who has given the corresponding instruction; and
a processing execution step of causing a processing execution unit to execute in parallel a plurality of pieces of processing for the corresponding users' instructions on a basis of the user-associated instruction information.
